(19) Europäisches Patentamt / European Patent Office / Office européen des brevets

(11) **EP 2 578 898 A1**

(12) **EUROPEAN PATENT APPLICATION**
published in accordance with Art. 153(4) EPC

(43) Date of publication:
**10.04.2013 Bulletin 2013/15**

(51) Int Cl.:
***F16D 65/092*** (2006.01)

(21) Application number: **10852530.4**

(22) Date of filing: **04.06.2010**

(86) International application number:
**PCT/JP2010/059554**

(87) International publication number:
**WO 2011/151926 (08.12.2011 Gazette 2011/49)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(71) Applicant: **TOYOTA JIDOSHA KABUSHIKI
KAISHA
Toyota-shi,
Aichi-ken, 471-8571 (JP)**

(72) Inventors:
• **MISUMI, Ryutaro**
**Toyota-shi**
**Aichi 471-8571 (JP)**
• **ISONO, Hiroshi**
**Toyota-shi**
**Aichi 471-8571 (JP)**

• **OSAWA, Takahiro**
**Toyota-shi**
**Aichi 471-8571 (JP)**
• **NISHII, Kazutoshi**
**Toyota-shi**
**Aichi 471-8571 (JP)**
• **AKITA, Yosuke**
**Toyota-shi**
**Aichi 471-8571 (JP)**

(74) Representative: **Albutt, Anthony John
D Young & Co LLP
120 Holborn
London EC1N 2DY (GB)**

(54) **BREAK DEVICE, FRICTION COUPLE AND BREAK PAD FOR BRAKE SYSTEM**

(57)    A first member (4) including a plurality of contacting portions (41) and an absorbing portion (46) capable of absorbing displacement of the contacting portions (41), a second member (5) provided capable of relatively displacing with respect to the first member (4) by contacting with the plurality of contacting portions (41), and a pressing mechanism (3) configured to press the first member (4) against the second member (5) are provided. Therefore, for example, since the absorbing portion (46) is capable of absorbing the displacement of the contacting portion (41), it is possible to make friction performance appropriate by stabilizing an area of a friction place.

FIG.1

EP 2 578 898 A1

## Description

Field

The present invention relates to a brake device, a friction couple for brake device, and a brake pad. Background

Patent Literature 1 discloses a friction pad of a disk brake in which lining of the friction pad pressed against a disk is sectioned into a plurality of layers such that abrasion resistance increases radially outwardly in the disk as a conventional brake device such as the disk brake.

Citation List

Patent Literature

Patent Literature 1: Japanese Utility Model Application Laid-open No. S56-113241

Summary

Technical Problem

The friction pad of the disk brake disclosed in Patent Literature 1 as described above has a room for improvement in friction performance, for example.

The present invention is achieved in view of the above-described circumstances and an object thereof is to provide the brake device, the friction couple for brake device, and the brake pad capable of making the friction performance appropriate.

Solution to Problem

In order to achieve the above mentioned object, a brake device according to the present invention includes a first member configured to include a plurality of contacting portions and an absorbing portion capable of absorbing displacement of the contacting portions; a second member provided capable of relatively displacing with respect to the first member by contacting with the plurality of contacting portions; and a pressing mechanism configured to press the first member against the second member.

Further, in the brake device, it is possible to configure that the contacting portion includes a rolling element contacting with the second member, and a cage rotatably holding the rolling element, and the second member rotates the rolling element in the cage in association with the relative displacement.

In order to achieve the above mentioned object, a brake device according to the present invention includes a first member configured to include a contacting portion and an absorbing portion, the contacting portion including a rolling element and a cage contacting with the rolling element and rotatably holding the rolling element, and the absorbing portion being capable of absorbing displacement of the cage; a second member provided in contact with the rolling element and configured to rotate the rolling element in the cage in association with relative displacement with respect to the first member; and a pressing mechanism configured to press the first member against the second member.

Further, in the brake device, it is possible to configure that a plurality of rolling elements and cages are provided, and the absorbing portion is capable of absorbing the displacement of the cages.

In order to achieve the above mentioned object, a brake device according to the present invention includes a first member configured to include a contacting portion and an absorbing portion capable of absorbing displacement of the contacting portion at a plurality of contact sites; a second member provided capable of relatively displacing with respect to the first member by contacting with the contacting portion; and a pressing mechanism configured to press the first member against the second member.

Further, in the brake device, it is possible to configure that the first member includes a supporting portion configured to support the contacting portion, and the absorbing portion absorbs the displacement of the contacting portion relative to the supporting portion in a pressing direction by the pressing mechanism.

Further, in the brake device, it is possible to configure that when the pressing force acts, a bending amount of a central portion of a contact site of the absorbing portion with the contacting portion becomes larger than the bending amount of an edge portion of the contact site of the absorbing portion with the contacting portion.

Further, in the brake device, it is possible to configure that a through-hole is provided on a central portion of a contact site of the absorbing portion with the contacting portion.

Further, in the brake device, it is possible to configure that the contacting portion includes a projection provided on a central portion of a contact site with the absorbing portion and configured to project toward the absorbing portion side.

Further, in the brake device, it is possible to configure that the absorbing portion is provided with a through-hole on a central portion of a contact site with the contacting portion, and the contacting portion includes a projection provided on a central portion of a contact site with the absorbing portion and configured to fit into the through-hole.

Further, in the brake device, it is possible to configure that the first member is provided with a concave portion on an accommodating side configured to accommodate the contacting portion, and a concave portion on a bending side having a size equal to or larger than a size of the concave portion on the accommodating side on a side opposite to the concave portion on the accommodating side across the absorbing portion.

Further, in the brake device, it is possible to configure that in the absorbing portion, a spring constant of a contact site with the contacting portion differs depending on a position of a contact site with the contacting portion.

Further, in the brake device, it is possible to configure that the absorbing portion is provided with a through-hole on a central portion of a contact site with the contacting portion and a size of the through-hole differs depending on a position of a contact site with the contacting portion.

Further, in the brake device, it is possible to configure that in the absorbing portion, an elastic modulus of the contact site differs depending on a position of a contact site with the contacting portion.

Further, in the brake device, it is possible to configure that the first member includes a dislocation preventing portion provided on a side opposite to the contacting portion across the absorbing portion and configured to prevent the contacting portion from dropping.

Further, in the brake device, it is possible to configure that the cage and the second member are configured such that force to rotate the rolling element by the second member is larger than force to hold the rolling element by the cage.

Further, in the brake device, it is possible to configure that the second member includes an accommodating groove formed on a contact portion with the rolling element in a direction of the relative displacement and configured to accommodate a part of the rolling element.

Further, in the brake device, it is possible to configure that the rolling element is formed of a hard material.

Further, in the brake device, it is possible to configure that the first member is incapable of rotating together with a wheel, and the second member is capable of rotating together with the wheel.

Further, in the brake device, it is possible to configure that the first member is a brake pad, and the second member is a brake rotor.

In order to achieve the above mentioned object, a friction couple for brake device according to the present invention includes a first member configured to include a plurality of contacting portions and an absorbing portion capable of absorbing displacement of the contacting portions; and a second member provided capable of relatively displacing with respect to the first member by contacting with the plurality of contacting portions.

In order to achieve the above mentioned object, a friction couple for brake device according to the present invention includes a first member configured to include a contacting portion and an absorbing portion, the contacting portion including a rolling element and a cage contacting with the rolling element and rotatably holding the rolling element, and the absorbing portion being capable of absorbing displacement of the cage; and a second member provided in contact with the rolling element and configured to rotate the rolling element in the cage in association with relative displacement with respect to the first member.

In order to achieve the above mentioned object, a brake pad according to the present invention includes a plurality of contacting portions configured to contact with a disk rotor rotating together with a wheel; and an absorbing portion capable of absorbing displacement of the plurality of contacting portions.

In order to achieve the above mentioned object, a brake pad according to the present invention includes a contacting portion configured to include a rolling element contacting with a disk rotor rotating together with a wheel, and a cage contacting with the rolling element and rotatably holding the rolling element; and an absorbing portion capable of absorbing displacement of the cage. Advantageous Effects of Invention

The brake device, the friction couple for brake device, and the brake pad according to the present invention have an effect that it is possible to make the friction performance appropriate by stabilizing an area of a friction site.

Brief Description of Drawings

FIG. 1 is a partial cross-sectional view illustrating a schematic configuration of a friction couple for brake device according to a first embodiment.

FIG. 2 is a schematic diagram illustrating a schematic configuration of a brake device according to the first embodiment.

FIG. 3 is a schematic exploded perspective view illustrating a layered structure of the friction couple for brake device according to the first embodiment.

FIG. 4 is a perspective view schematically illustrating a surface shape of a contact wall surface of a cage with a rolling element according to the first embodiment.

FIG. 5 is a side view of a brake pad according to the first embodiment.

FIG. 6 is a front view of a surface of the brake pad on a side pressed against a disk rotor according to the first embodiment.

FIG. 7 is a schematic diagram explaining an absorbing member of the brake pad according to the first embodiment.

FIG. 8 is a schematic diagram explaining an unbalanced load on the brake pad.

FIG. 9 is a perspective view schematically illustrating a surface shape of a contact wall surface of a cage with a rolling element according to a modified example.

FIG. 10 is a perspective view schematically illustrating the surface shape of the contact wall surface of the cage with the rolling element according to a modified example.

FIG. 11 is a perspective view schematically illustrating the rolling element according to the modified example.

FIG. 12 is a schematic cross-sectional view of a friction couple for brake device according to a second embodiment.

FIG. 13 is a schematic cross-sectional view of a friction couple for brake device according to a third embodiment.

FIG. 14 is a schematic cross-sectional view of a friction couple for brake device according to a fourth embodiment.

FIG. 15 is a schematic cross-sectional view of a friction couple for brake device according to a fifth embodiment.

FIG. 16 is a schematic exploded perspective view illustrating a layered structure of a friction couple for brake device according to a sixth embodiment.

FIG. 17 is a schematic exploded perspective view illustrating a layered structure of a friction couple for brake device according to a seventh embodiment.

FIG. 18 is a schematic exploded perspective view illustrating a layered structure of a friction couple for brake device according to an eighth embodiment.

FIG. 19 is a schematic exploded perspective view illustrating a layered structure of a friction couple for brake device according to a ninth embodiment.

FIG. 20 is a schematic cross-sectional view of a friction couple for brake device according to a tenth embodiment.

FIG. 21 is a schematic diagram explaining an absorbing member of a brake pad according to an eleventh embodiment.

FIG. 22 is a schematic diagram explaining an absorbing member of a brake pad according to a twelfth embodiment.

FIG. 23 is a perspective view schematically illustrating a surface shape of an abutment surface of a disk rotor against a rolling element according to the twelfth embodiment.

FIG. 24 is a schematic exploded perspective view illustrating a layered structure of a friction couple for brake device according to a thirteenth embodiment.

FIG. 25 is a schematic diagram explaining an absorbing member of a brake pad according to the thirteenth embodiment.

Description of Embodiments

Hereinafter, embodiments of a brake device, a friction couple for brake device, and a brake pad according to the present invention are described in detail with reference to the drawings. Meanwhile, the invention is not limited by the embodiments. Components in the following embodiments include the component easily replaced by one skilled in the art and a substantially identical component.

[First Embodiment]

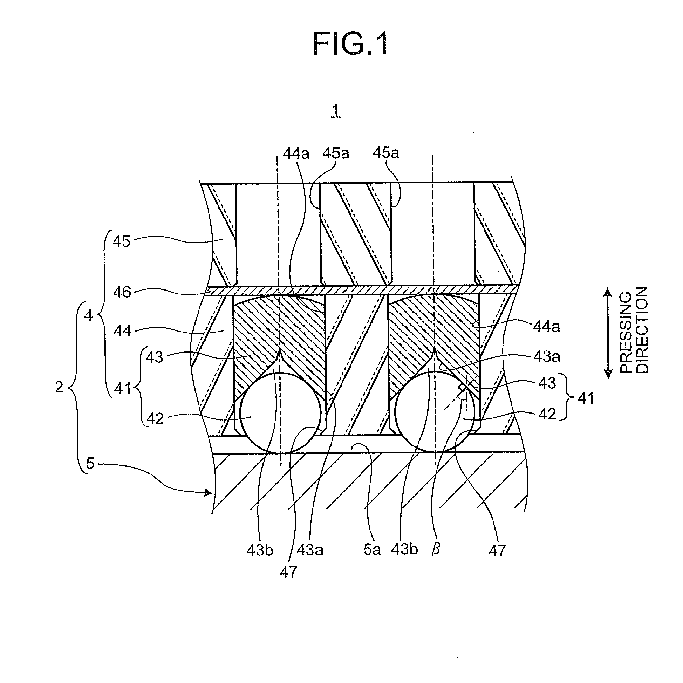

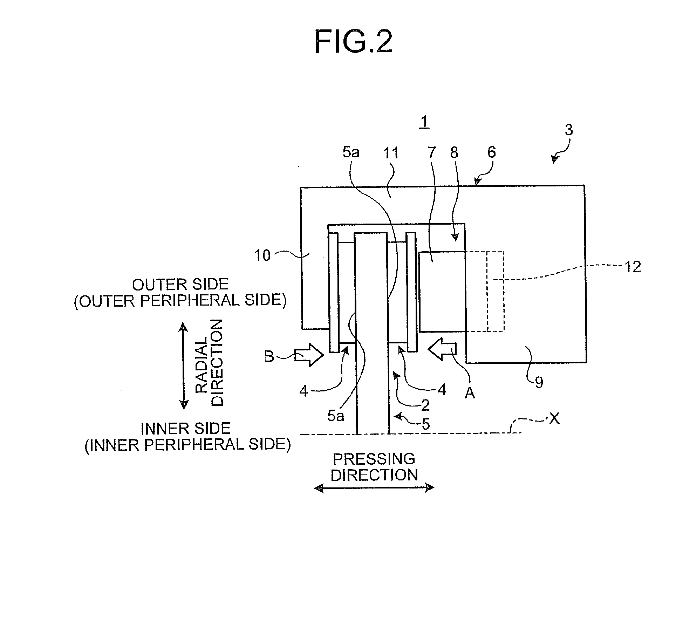

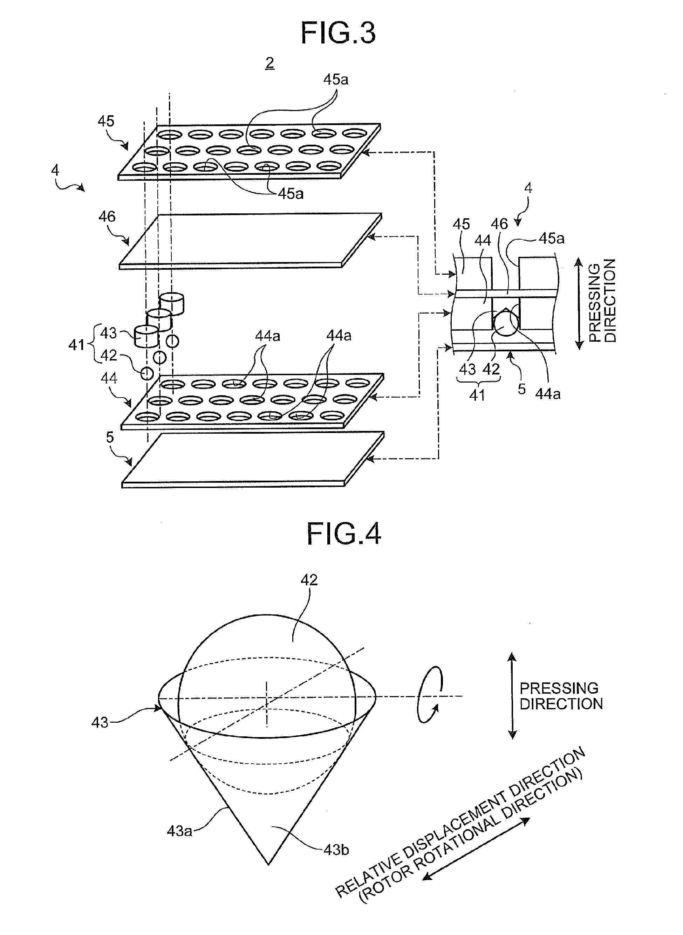

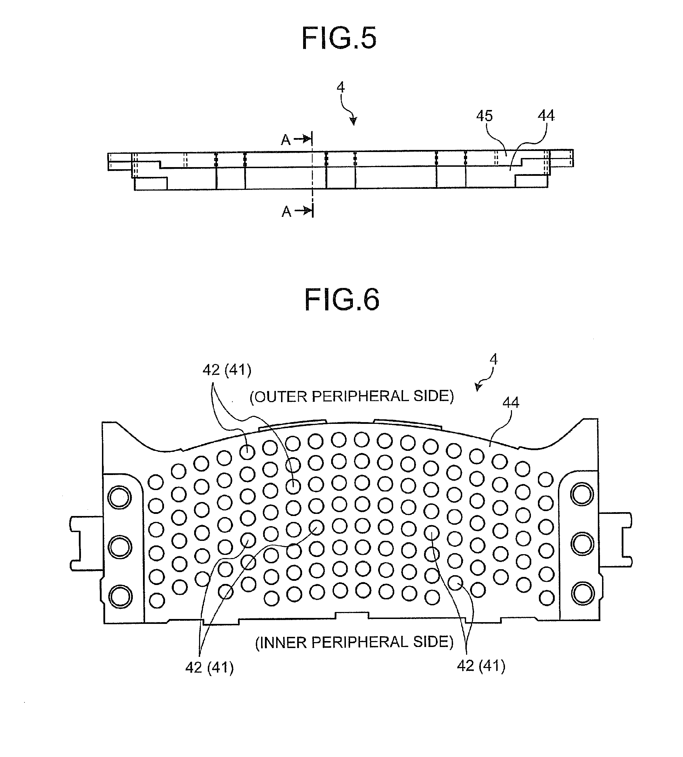

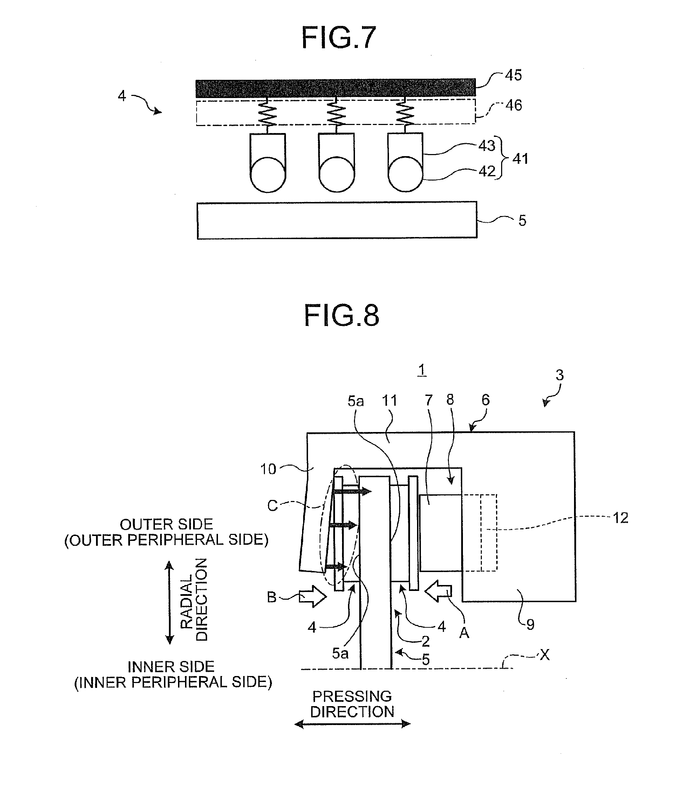

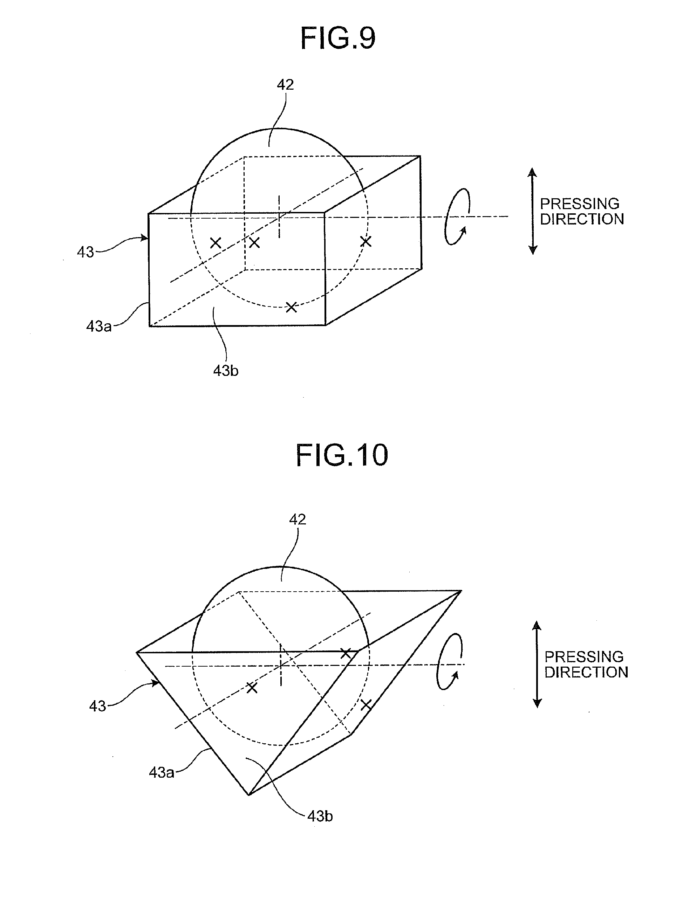

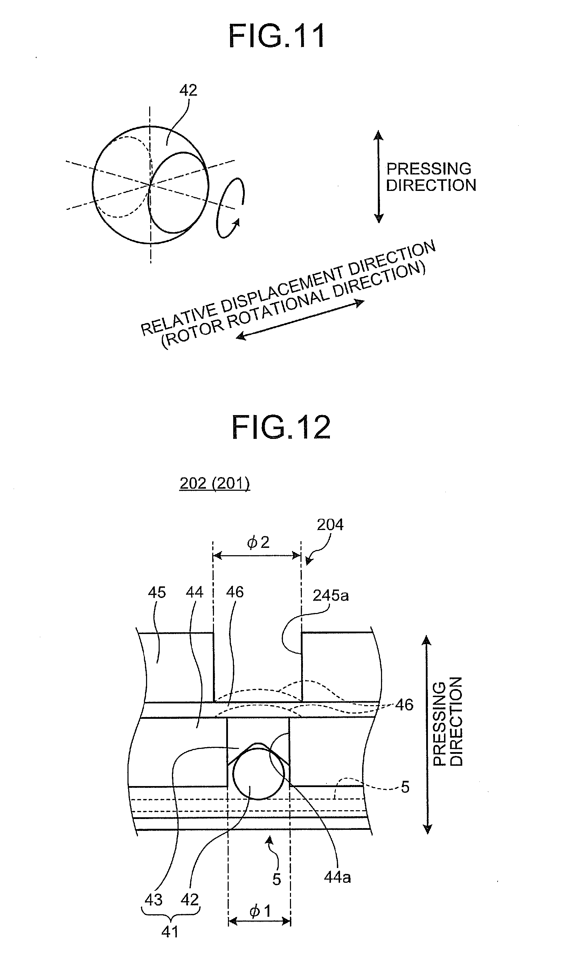

FIG. 1 is a partial cross-sectional view (cross-sectional view taken along line A-A in FIG. 5) illustrating a schematic configuration of a friction couple for brake device according to a first embodiment, FIG. 2 is a schematic diagram illustrating a schematic configuration of a brake device according to the first embodiment, FIG. 3 is a schematic exploded perspective view illustrating a layered structure of the friction couple for brake device according to the first embodiment, FIG. 4 is a perspective view schematically illustrating a surface shape of a contact wall surface of a cage with a rolling element according to the first embodiment, FIG. 5 is a side view of a brake pad according to the first embodiment, FIG. 6 is a front view of a surface of the brake pad on a side pressed against a disk rotor according to the first embodiment, FIG. 7 is a schematic diagram illustrating an absorbing member of the brake pad according to the first embodiment, FIG. 8 is a schematic diagram explaining an unbalanced load on the brake pad, FIGS. 9 and 10 are perspective views schematically illustrating surface shapes of contact wall surfaces of a cage with a rolling element according to modified examples, and FIG. 11 is a perspective view schematically illustrating the rolling element according to the modified example.

As illustrated in FIGS. 1 and 2, a brake device 1 of this embodiment is typically mounted on a vehicle for applying braking force to a wheel rotatably supported by a vehicle body of the vehicle and is provided with a friction couple for brake device 2 and an actuator 3 as a pressing mechanism.

The friction couple for brake device 2 is configured to generate predetermined frictional force (frictional resistance force) between friction elements when the braking force is applied to the wheel. The friction couple for brake device 2 includes a brake pad 4 as a first member and a disk rotor (brake rotor) 5 as a second member. A pair of brake pads 4 is provided on a side of the vehicle body so as not to be rotatable together with the wheel. The disk rotor 5 is provided on a side of the wheel so as to be rotatable integrally with the wheel. According to this, the brake pad 4 and the disk rotor 5 are configured so as to be relatively displaced, that is to say, they are relatively rotatable in a rotational direction of the disk rotor 5. A pair of brake pads 4 is arranged on both sides of the disk rotor 5 to be opposed to abutment surfaces 5a on both sides of the disk rotor 5. A pair of brake pads 4 sandwiches the disk rotor 5 from the both sides thereof according to operation of the actuator 3.

The actuator 3 is configured to press the brake pad 4 against the disk rotor 5 when the braking force is applied to the wheel. The actuator 3 includes a caliper 6 and a piston 7 as illustrated in FIG. 2. The caliper 6 has a U-shape to straddle the disk rotor 5 and is supported by a bracket (not illustrated) fixed on the side of the vehicle body. The caliper 6 supports a pair of brake pads 4 such that they can move closer to or away from the abutment surfaces 5a of the disk rotor 5. The caliper 6 includes a cylinder unit 9 provided with a cylinder mechanism 8, which enables front-rear movement of the piston 7, a reaction unit 10 arranged on a side opposite to the cylinder unit 9 across the disk rotor 5, and a connecting unit 11, which connects the cylinder unit 9 to the reaction unit 10. A pair of brake pads 4 includes an inner pad arranged on a side of the cylinder unit 9 in the caliper 6 and an outer pad arranged on a side of the reaction unit 10. The cylinder mechanism 8 is such that the piston 7 is movably supported by the cylinder unit 9 and a liquid-pressure chamber 12 is partitioned by the cylinder unit 9, the piston 7, a seal and the like. A tip end of the piston 7 is opposed to the brake pad (inner pad) 4.

Therefore, in the brake device 1, when the liquid-pressure chamber 12 is supplied with operating fluid to be pressurized according to depression operation of a brake pedal by a driver, for example, the piston 7 moves forward in a direction indicated by an arrow A (direction in which the brake pad (inner pad) 4 moves closer to the disk rotor 5) and the tip end of the piston 7 pushes one brake pad 4 to allow the one brake pad 4 to move closer to one abutment surface 5a of the disk rotor 5. At that time, the caliper 6 can move forward in a direction opposite to that of the piston 7, that is to say, in a direction indicated by an arrow B (direction in which the brake pad (outer pad) 4 moves closer to the disk rotor 5) to allow the other brake pad 4 to move closer to the other abutment surface 5a of the disk rotor 5 by movement reaction force of forward movement of the piston 7. When the brake pads 4 abut the abutment surfaces 5a of the disk rotor 5 to be pressed against the same and sandwich the disk rotor 5, predetermined rotational resistance force acts on the disk rotor 5, which rotates together with the wheel, and the brake device 1 can apply the braking force to the disk rotor 5 and the wheel, which rotates integrally with the same. In the brake device 1, the piston 7 and the caliper 6 are returned to predetermined positions and the brake pads 4 move away from the disk rotor 5 when the liquid-pressure chamber 12 is depressurized.

The brake device 1 of this embodiment can preferably set performance such as friction performance and abrasion resistance performance irrespective of a projected area of the surface on the side on which the brake pad 4 is pressed against the disk rotor 5, for example, because the brake pad 4, which composes the friction couple for brake device 2, includes a contacting portion 41 including a rolling element 42 and a cage 43, which rotatably holds the rolling element 42, on the surface on the side pressed against the disk rotor 5, as illustrated in FIG. 1. Herein, the surface of the brake pad 4 on the side pressed against the disk rotor 5 is the surface of the brake pad 4 on a side opposed to the abutment surface 5a of the disk rotor 5. Further, since the brake pad 4 includes an absorbing member 46 as an absorbing portion capable of absorbing displacement of the contacting portion 41, the brake device 1 stabilizes an area of a friction place and makes the friction performance more appropriate.

Meanwhile, in FIG. 1, a depth direction in the drawing is a direction of relative displacement between the brake pad 4 and the disk rotor 5, that is to say, the rotational direction of the disk rotor 5. The inner pad and the outer pad of the brake pads 4 are configured substantially the same, so that they are described to have a common configuration unless it is required to especially distinguish the inner pad and the outer pad from each other.

When the brake pad 4 is pressed against the disk rotor 5, which rotates, the rolling element 42 rotates while being held by the cage 43, so that the brake device 1 generates the braking force to brake the relative displacement between the brake pad 4 and the disk rotor 5, that is to say, rotation of the disk rotor 5 by the frictional force (frictional resistance force) generated between the rolling element 42 and the cage 43 according to rotation of the rolling element 42. The brake device 1 adopts a structure in which the rolling element 42 arranged on the surface of the brake pad 4 on the side pressed against the disk rotor 5 can roll (rotate) in place. The brake device 1 allows the rolling element 42 to rotate by the disk rotor 5, which rotates together with the wheel, and frictionally brakes the rolling element 42, which rotates, on a side of the cage 43.

Specifically, the brake pad 4 includes the contacting portion 41, supporting members 44 and 45 as a supporting portion, the absorbing member 46 as the absorbing portion and the like as illustrated in FIGS. 1 and 3. The brake pad 4 has the layered structure in the order of the contacting portion 41, the supporting member 44, the absorbing member 46, and the supporting member 45 from the side of the surface pressed against the disk rotor 5 (surface opposed to the abutment surface 5a) and the rolling element 42 is held by the cage 43 in the contacting portion 41.

The contacting portion 41 is a portion, which is brought into contact with the disk rotor 5 at the time of braking in the brake pad 4, and this herein includes the rolling element 42 and the cage 43.

The rolling element 42 is rotatable in the direction of the relative displacement between the brake pad 4 and the disk rotor 5, that is to say, in the rotational direction of the disk rotor 5. The rolling element 42 is arranged between the abutment surface 5a of the disk rotor 5 and a contact wall surface 43a of the cage 43 to be described later and is brought into contact with the abutment surface 5a and the contact wall surface 43a when the brake pad 4 is pressed against the disk rotor 5. Herein, the rolling element 42 is a spherical object (spherical member). The rolling element 42 is formed of a so-called hard material in the same manner as the disk rotor 5 to be described later. The rolling element 42 is typically formed of a material having relatively high heat resistance, predetermined or higher strength, and relatively high hardness such as alumina and silicon nitride as the hard material.

The cage 43 is configured to be in contact with the rolling element 42 to hold the rolling element 42 so as to be rotatable in place as described above. The cage 43 basically holds the rolling element 42 so as not to be relatively displaced but so as to be rotatable. The cage 43 holds the rolling element 42 such that a rotational axis line of the rolling element 42 is substantially orthogonal to the rotational direction of the disk rotor 5 and a pressing direction by the actuator 3. The rolling element 42 rotates around the rotational axis line in a state of being held in place by the cage 43 such that the rotational axis line is not moved while being in contact with the brake pad 4 and the disk rotor 5 in association with the relative displacement (relative rotation) between the brake pad 4 and the disk rotor 5. The cage 43 is typically formed of a material having relatively high abrasion resistance such as tungsten and carbide.

Herein, the cage 43 is formed into a cylindrical shape so as to conform to a shape of the rolling element 42 and includes a holding groove 43b to hold the rolling element 42 on a surface on the side pressed against the disk rotor 5, that is to say, the surface on a side to be in contact with the rolling element 42. Herein, in the holding groove 43b, the contact wall surface 43a with the rolling element 42 inclines relative to a direction of the rotational axis line of the rolling element 42 and the pressing direction by the actuator 3. According to this, the brake device 1 can relatively increase the frictional force generated between the rolling element 42 and the cage 43 according to a groove angle of the holding groove 43b as compared to a case in which a surface shape of a contact surface of the cage 43 with the rolling element 42 is flat as described later, and as a result, this can relatively increase the braking force, which this can generate.

The holding groove 43b of this embodiment is formed such that the contact wall surface 43a inclined as described above has a curved surface shape as illustrated in FIG. 4. Although it is herein described that the holding groove 43b is formed into a conical shape, this may also be formed into a circular truncated cone shape. A bottom surface side of the conical shape of the holding groove 43b is located on the side pressed against the disk rotor 5. An inner diameter of the bottom surface of the conical shape of the holding groove 43b is larger than an outer diameter of the rolling element 42, for example. A part of the rolling element 42 is held in the holding groove 43b. Therefore, the holding groove 43b and the rolling element 42 are such that the contact wall surface 43a, which is an inner surface of the holding groove 43b, and an outer surface of the rolling element 42 are in contact with each other and a contact portion has a circular shape.

The supporting members 44 and 45 compose so-called back metal for supporting the contacting portion 41. The supporting members 44 and 45 are typically formed of a material having relatively high heat resistance and predetermined or higher strength such as a steel sheet and stainless. That is to say, in the brake pad 4 of this embodiment, the supporting members 44 and 45 are assembled so as to be overlapped with each other as illustrated in FIG. 5, thereby composing the back metal for supporting the contacting portion 41. The supporting members 44 and 45 typically support the cage 43 of the contacting portion 41. The supporting members 44 and 45 sandwich to hold the absorbing member 46 to be described later.

In further detail, the supporting member 44 is herein configured to position the cage 43 in a predetermined position. Herein, the brake pad 4 of this embodiment includes a plurality of contacting portions 41 composed of the rolling element 42 and the cage 43 to hold the same as illustrated in FIG. 6, that is to say, a plurality of rolling elements 42 and cages 43 are provided. The supporting member 44 positions a plurality of cages 43 in predetermined positions.

With reference to FIGS. 1 and 3 again, the supporting member 44 is formed of a plate-shaped member and is provided with an installation hole 44a as a concave portion on an accommodating side. The installation hole 44a is the concave portion to accommodate the contacting portion 41, that is to say, the rolling element 42 and the cage 43, and this herein penetrates through the supporting member 44 in a cylindrical manner in the pressing direction by the actuator 3. A plurality of installation holes 44a are provided so as to correspond to a plurality of cages 43. Each cage 43 is inserted into each installation hole 44a to be positioned. According to this, the supporting member 44 can restrain movement of each cage 43 such that each cage 43 does not relatively move in a direction other than the pressing direction by the actuator 3 (typically, in a pad surface direction).

The supporting member 45 is a plate-shaped supporting member on which pressing force from the actuator 3 acts and is a base part of the brake pad 4. The supporting member 45 is formed of a plate-shaped member and the brake pad 4 is provided on the caliper 6 (refer to FIG. 2) such that the supporting member 45 abuts the above-described piston 7 (refer to FIG. 2) and the reaction unit 10 (refer to FIG. 2).

The absorbing member 46 is sandwiched between the supporting member 44 on the side pressed against the disk rotor 5 and the supporting member 45 on an opposite side (rear surface side) and a relative positional relationship among them is fixed in the pressing direction by the actuator 3.

Herein, the supporting member 44 is provided with a dislocation preventing portion 47 on a surface on the side pressed against the disk rotor 5 in the pressing direction by the actuator 3 as illustrated in FIG. 1. The dislocation preventing portion 47 prevents the rolling element 42 held by the cage 43 from dropping. The dislocation preventing portion 47 is formed as a portion of the supporting member 44 in which a diameter of the installation hole 44a is reduced and a part of the outer surface of each rolling element 42 is exposed through an opening (exposure opening) of the dislocation preventing portion 47 in a state in which the rolling element 42 is held by each cage 43. A part of the outer surface of each rolling element 42 is exposed to project on a side opposite to each cage 43 across the dislocation preventing portion 47 in the pressing direction by the actuator 3. According to this, the dislocation preventing portion 47 can prevent the rolling element 42 from dropping from the cage 43 and allow the outer surface of the rolling element 42 exposed from each opening of the dislocation preventing portion 47 to be in contact with the abutment surface 5a of the disk rotor 5. That is to say, the supporting member 44 herein doubles as a plate-shaped cover (lid member) for preventing the rolling element 42 from dropping. Meanwhile, in the brake pad 4, the dislocation preventing portion 47 may be provided on a member other than the supporting member 44. That is to say, the brake pad 4 may be provided with a drop preventing tool, which is a plate-shaped lid member on which the dislocation preventing portion 47 is formed, fixed to the surface of the supporting member 44 on the side pressed against the disk rotor 5.

The rolling element 42, the cage 43, and the supporting member 44 are sandwiched between the dislocation preventing portion 47 on the side pressed against the disk rotor 5 and the absorbing member 46 on the opposite side (rear surface side) and the relative positional relationship among them is fixed in the pressing direction by the actuator 3 in a state in which each cage 43 is inserted into each installation hole 44a and each rolling element 42 is held in each holding groove 43b. That is to say, the brake pad 4 of this embodiment is provided with the absorbing member 46 on the rear surface side of a plurality of cages 43, that is to say, on the side opposite to the side pressed against the disk rotor 5.

The absorbing member 46 is provided between the supporting member 45 and a plurality of cages 43 in the pressing direction by the actuator 3. The absorbing member 46 is capable of absorbing the displacement of the contacting portion 41, herein the cage 43, which composes the contacting portion 41, thereby absorbing the displacement of the rolling element 42, which composes the contacting portion 41. The absorbing member 46 absorbs the displacement of the cage 43 relative to the supporting members 44 and 45 in the pressing direction by the actuator 3. The absorbing member 46 absorbs the displacement of the cage 43 when force in the pressing direction by the actuator 3 acts. The absorbing member 46 is capable of absorbing the displacement of a plurality of cages 43. In other words, the absorbing member 46 is configured to allow the pressing force by the actuator 3 to dispersedly act on each contacting portion 41.

The absorbing member 46 is a sheet-shaped elastic body and is typically formed of a material having relatively high heat resistance, predetermined or higher strength such as metal plate spring and titan. The absorbing member 46 is preferably formed of a material having a relatively wide elastic range as compared to the supporting members 44 and 45. The absorbing member 46 individually elastically supports a plurality of cages 43 as illustrated in FIG. 7. The absorbing member 46 elastically deforms, thereby allowing the displacement of each contacting portion 41 in the pressing direction by the actuator 3. The absorbing member 46 lies between the supporting member 45 and a plurality of cages 43 and elastically deforms when the pressing force by the actuator 3 acts to disperse the above-described pressing force according to deformation, thereby allowing the pressing force to substantially uniformly act on a plurality of cages 43.

Herein, with reference to FIGS. 1 and 3 again, the supporting member 45 of this embodiment is provided with an escaping portion 45a as a concave portion on a bending side. The escaping portion 45a is provided on a side opposite to the supporting member 44 across the absorbing member 46, furthermore, on a side opposite to the cage 43. The escaping portion 45a is the concave portion, which allows strain deformation of the absorbing member 46 and this herein penetrates through the supporting member 45 in the cylindrical manner in the pressing direction by the actuator 3. A plurality of escaping portions 45a are provided so as to correspond to a plurality of cages 43. According to this, the absorbing member 46 can further improve a dispersion effect of the pressing force by the actuator 3. Herein, the escaping portion 45a is formed to have a diameter substantially equivalent to that of the installation hole 44a.

In the brake pad 4, the dislocation preventing portion 47, the rolling element 42, the cage 43, the installation hole 44a, and the escaping portion 45a are opposed to one another in the pressing direction by the actuator 3 in a state in which the relative positional relationship among the contacting portion 41 composed of the rolling element 42 and the cage 43, the supporting members 44 and 45, and the absorbing member 46 configured in the above-described manner is fixed.

Meanwhile, the escaping portion 45a may be a bottomed hole, which does not penetrate through the supporting member 45. The supporting member 45 may also have a configuration without the escaping portion 45a, for example, and in this case, the absorbing member 46 may be formed of sheet-shaped rubber and the like, for example. The absorbing member 46 is not always composed of one member, this may be composed of a plurality of divided members, and this may be divided into a plurality of parts so as to correspond to a plurality of contacting portions 41, for example.

The disk rotor 5 is provided so as to be in contact with the rolling element 42 and rotates the rolling element 42 in the cage 43 in association with the relative displacement with respect to the brake pad 4. The disk rotor 5 is formed into a circular disk shape rotatable around the rotational axis line. The disk rotor 5 is formed of the hard material similar to that of the rolling element 42.

The brake device 1 has a following configuration as the configuration in which the disk rotor 5 rotates the rolling element 42 in the cage 43 in association with the relative displacement between the brake pad 4 and the disk rotor 5 configured as described above, in other words, the configuration to rotate the rolling element 42 by the disk rotor 5, which rotates together with the wheel, and to causes friction of the rolling element 42 on the side of the cage 43. That is to say, the cage 43 and the disk rotor 5 are configured such that force to rotate the rolling element 42 by the disk rotor 5 is larger than force to hold the rolling element 42 by the cage 43. The brake device 1 herein realizes the above-described configuration by setting such that a relationship among a friction coefficient (dynamic friction coefficient) $\mu$1 of a contact portion between the disk rotor 5 and the rolling element 42, a friction coefficient (dynamic friction coefficient) $\mu$2 of the contact portion between the cage 43 and the rolling element 42, and an angle $\beta$ between a normal line of the contact wall surface 43a in the contact portion between the cage 43 and the rolling element 42 and the pressing direction by the actuator 3 (refer to FIG. 1) satisfies a predetermined condition. Meanwhile, the angle $\beta$ ($0° < \beta < 90°$) corresponds to an angle of an apex of a circular cone of the holding groove 43b.

Herein, torque generated between the rolling element 42 and the disk rotor 5 is set to torque T1 and the torque generated between the rolling element 42 and the cage 43 is set to torque T2. The torque T1 is the torque corresponding to the force to rotate the rolling element 42 by the disk rotor 5 and is the torque applied by a rotor generated when the rolling element 42 is rotated by the disk rotor 5, which rotates together with the wheel. The torque T2 is the torque corresponding to the force to hold the rolling element 42 by the cage 43, in other words, the force to stop the rotation of the rolling element 42 by the cage 43 and is cage braking torque generated by rotation of the rolling element 42 while being held by the cage 43. In the brake device 1, the disk rotor 5 can rotate the rolling element 42 in the cage 43 in association with the relative displacement between the brake pad 4 and the disk rotor 5 when the torque T1 acting on the contact portion between the disk rotor 5 and the rolling element 42 is larger than the torque T2 acting on the contact portion between the cage 43 and the rolling element 42, that is to say, when T1 > T2 is satisfied. That is to say, a condition that the disk rotor 5 rotates the rolling element 42 in the cage 43 in association with the relative displacement between the brake pad 4 and the disk rotor 5 is that T1 > T2 is satisfied.

The brake device 1 can satisfy the condition T1 > T2 by setting the shape of the holding groove 43b of the cage 43, the friction coefficient of the outer surface of the rolling element 42, the friction coefficient of the contact wall surface 43a of the cage 43, the friction coefficient of the abutment surface 5a of the disk rotor 5 and the like such that the relationship among the friction coefficient $\mu$1, the friction coefficient $\mu$2, and the angle $\beta$ satisfies a condition equation represented by an equation (1) indicated in following Equation 1, for example. That is to say, the cage 43 and the disk rotor 5 are formed into shapes such that the relationship among the friction coefficient $\mu$1, the friction coefficient $\mu$2, and the angle $\beta$ satisfies the equation (1). Therefore, the brake device 1 can realize the configuration in which the torque T1 is larger than the torque T2, furthermore, the configuration to rotate the rolling element 42 by the disk rotor 5, which rotates together with the wheel, and causes the friction of the rolling element 42 on the side of the cage 43 by setting such that the relationship among the friction coefficient $\mu$1, the friction coefficient $\mu$2, and the angle $\beta$ satisfies the condition of the above-described equation (1).

$$\mu 1 > \frac{\mu 2}{2}\left(\frac{2\beta}{\sin 2\beta} + 1\right) \qquad \cdots (1)$$

In the brake device 1 configured as described above, the rolling element 42 rotates (rolls) in the cage 43 by transmission of the rotation of the disk rotor 5 to the rolling element 42 when the brake pad 4 is pressed against the disk rotor 5, which rotates. That is to say, the brake device 1 can roll the rolling element 42 by the disk rotor 5 and causes the friction of the rolling element 42 on the side of the cage 43 of the brake pad 4. Since the rolling element 42 rotates while being held by the cage 43, the rolling element 42 slides against the cage 43 according to the rotation of the rolling element 42, and the brake device 1 can generate the braking force to brake the rotation of the disk rotor 5 by the frictional force (frictional resistance force) generated between the rolling element 42 and the cage 43. The brake device 1 can brake the relative displacement by the frictional force generated between the rolling element 42 and the cage 43 when the disk rotor 5 rolls the rolling element 42 in association with the relative displacement between the brake pad 4 and the disk rotor 5 in a state in which the brake pad 4 is pressed against the disk rotor 5. As a result, the brake device 1 can apply predetermined braking force to the disk rotor 5 and eventually to the wheel. At that time, when the contact wall surface 43a is inclined so as to correspond to the angle $\beta$ as in this embodiment, the brake device 1 can generate braking force f approximately $(1/2) \cdot [(2\beta/\sin2\beta)+1]$ times as much as the braking force when the surface shape of the contact surface of the cage 43 with the rolling element 42 is flat, for example, thereby relatively improving braking performance.

As a result, the brake device 1 can preferably set the performance such as the friction performance and the abrasion resistance performance irrespective of the projected area of the surface of the brake pad 4 on the side pressed against the disk rotor 5, for example. That is to say, the brake device 1 can appropriately change the performance such as the friction performance and the abrasion resistance performance irrespective of the projected area of the brake pad 4 on the side of the cage 43 by appropriately adjusting the number of rolling elements 42, the shape of the holding groove 43b of the cage 43, the friction coefficient of the outer surface of the rolling element 42, the friction coefficient of the contact wall surface 43a of the cage 43, the friction coefficient of the abutment surface 5a of the disk rotor 5 and the like, and can realize the brake device 1, the friction couple for brake device 2, and the brake pad 4 in which the performance is independent from the projected area of the brake pad 4 on the side of the cage 43.

For example, the brake device 1 can make an area of an entire outer surface of each rolling element 42 an abrasion area in the brake pad 4 by providing a configuration to brake the rotation of the disk rotor 5 by the frictional force generated between the rolling element 42 and the cage 43 when the disk rotor 5 rolls the rolling element 42. As a result, the brake device 1 can make the abrasion area equal to or larger than the projected area of the brake pad 4 (pad flat surface) on the side of the cage 43, thereby improving the abrasion resistance performance.

The brake device 1 is provided with the configuration to brake the rotation of the disk rotor 5 by the frictional force generated between the rolling element 42 and the cage 43 when the disk rotor 5 rolls the rolling element 42, thereby stabilizing a load on a friction contact place and a friction contact point and improving the friction performance also when the contacting portion 41 is formed of the hard material as compared to a case in which the rotation of the disk rotor 5 is braked by the friction between flat surfaces, for example.

In the brake device 1, a plurality of contacting portions 41 are independently provided and the absorbing member 46 can absorb the displacement of each contacting portion 41. Therefore, in the brake device 1, when the pressing force by the actuator 3 acts on the supporting member 45, the absorbing member 46 deforms by reaction force received from the cage 43, which composes the contacting portion 41, to be herein bent on a side of the escaping portion 45a, thereby absorbing the displacement of each contacting portion 41 in the pressing direction, so that the pressing force is dispersed by the absorbing member 46 to substantially uniformly act on a plurality of cages 43. According to this, the brake device 1 can make a contacting load between each rolling element 42, which composes each contacting portion 41, and the disk rotor 5 substantially uniform for each rolling element 42, thereby inhibiting a pressing load from acting on a specific place in an unbalanced manner on the surface of the brake pad 4 pressed against the disk rotor 5 (surface opposed to the abutment surface 5a) to generate the unbalanced load. As a result, the brake device 1 can further stabilize the load on each friction contact point and stabilize a friction area in the brake pad 4, thereby making the friction performance appropriate and improving stability of the friction performance. Also, according to this, the brake device 1 can further uniformize an abrasion state of each rolling element 42.

For example, in the brake device 1, when the liquid-pressure chamber 12 of the actuator 3 is supplied with the operation fluid and the pressing force by the actuator 3 acts on the supporting member 45, a tip end of the reaction unit 10 of the caliper 6 deforms so as to open outward as illustrated in an enclosing line C in FIG. 8, so that the load on a tip end side of the reaction unit 10 tends to be relatively small as compared to the load on a base end side with higher support rigidity. That is to say, the brake pad 4 has a tendency that the load on an outer side in a radial direction, that is to say, on an outer peripheral side of the disk rotor 5 becomes relatively large and the load on an inner side in the radial direction, that is to say, on an inner peripheral side of the disk rotor 5 becomes relatively small (meanwhile, the radial direction of the disk rotor 5 is a direction orthogonal to a rotational axis line X of the disk rotor 5 and a side of the rotational axis line X in the radial direction is referred to as an inner side in the radial direction and an opposite side is referred to as an outer side in the radial direction). However, in the brake device 1, as described above, the absorbing member 46 absorbs the displacement of each contacting portion 41, thereby inhibiting the pressing load from acting on the specific place in the unbalanced manner in the brake pad 4 and inhibiting deterioration in brake performance and deterioration in so-called noise performance, for example.

Also, for example, in the brake device 1, even in a case in which the brake pad 4 is thermally expanded to deform such that the vicinity of a central portion of the surface thereof opposed to the abutment surface 5a projects by friction heat and the like generated at the time of braking, since a plurality of contacting portions 41 are independently provided and the absorbing member 46 can absorb the displacement of each contacting portion 41, it is possible to stabilize the friction area as described above, thereby making the friction performance appropriate also for thermal expansion of the brake pad 4.

The brake device 1 according to the above-described embodiment is provided with the brake pad 4 including a plurality of contacting portions 41 and the absorbing member 46 capable of absorbing the displacement of a plurality of contacting portions 41, the disk rotor 5 provided so as to be in contact with a plurality of contacting portions 41 and so as to be able to relatively displaced with respect to the brake pad 4, and the actuator 3, which presses the brake pad 4 against the disk rotor 5. The friction couple for brake device 2 according to the above-described embodiment is provided with the brake pad 4 including the contacting portion 41 including the rolling element 42 and the cage 43, which is in contact with the rolling element 42 to hold the rolling element 42 so as to be rotatable, and the absorbing member 46 capable of absorbing the displacement of the cage 43, and the disk rotor 5 provided so as to be in contact with the rolling element 42 to rotate the rolling element 42 in the cage 43 in association with the relative displacement with respect to the brake pad 4. The brake pad 4 according to the above-described embodiment is provided with the contacting portion 41 including the rolling element 42, which is in contact with the disk rotor 5 rotating together with the wheel, and the cage 43, which is in contact with the rolling element 42 to hold the rolling element 42 so as to be rotatable, and the absorbing member 46 capable of absorbing the displacement of the cage 43. Therefore, the brake device 1, the friction couple for brake device 2, and the brake pad 4 can preferably set the performance irrespective of the projected area of the surface of the brake pad 4 on the side pressed against the disk rotor 5, for example. Since the absorbing member 46 can absorb the displacement of the contacting portion 41, the brake device 1, the friction couple for brake device 2, and the brake pad 4 can make the friction performance appropriate by stabilizing the area of the friction place.

Meanwhile, although the above-described brake device 1 is described such that the holding groove 43b is formed into the conical shape, there is no limitation and this can formed into a rectangular parallelepiped shape or a cubic shape as illustrated in FIG. 9 or can be formed into a triangular prism shape as illustrated in FIG. 10.

Although the above-described brake device 1 is described such that the cage 43 includes the holding groove 43b, a holding surface may be flat. In this case, the brake device 1 may realize the configuration in which the torque T1 is larger than the torque T2, furthermore, the configuration to rotate the rolling element 42 by the disk rotor 5 rotating together with the wheel and to cause the friction of the rolling element 42 on the side of the cage 43 by appropriately adjusting the friction coefficient between the rolling element 42 and the disk rotor 5 and the friction coefficient between the rolling element 42 and the cage 43.

Although the above-described brake device 1 is described supposing that the rolling element 42 is the spherical object, there is no limitation. A roller having a barrel shape, a spindle shape or a cylindrical shape as illustrated in FIG. 11, which may be rotate in the direction of the relative displacement between the brake pad 4 and the disk rotor 5, that is to say, in the rotational direction of the disk rotor 5, may be used as the rolling element 42.

Also, in the brake device 1, since the rolling element 42 formed of the hard material is used as a part of the contacting portion 41, a melting point of a site, which is in contact with the disk rotor 5, of the contacting portion 41 can be made relatively high as compared to a case in which a general friction member is used, for example, and according to this, an allowable range of the heat of the friction couple for brake device 2 can be enlarged.


[Second Embodiment]

FIG. 12 is a schematic cross-sectional view of a friction couple for brake device according to a second embodiment. A brake device, the friction couple for brake device, and a brake pad according to the second embodiment are different from those of the first embodiment in that a predetermined site of an absorbing portion is easily bent. In addition to this, description of a configuration, an action and an effect common with those of the above-described embodiment is not repeated as far as possible and the same reference numeral is assigned thereto. Also, as for a main configuration, the drawings described in the first embodiment are appropriately referred to. Herein, illustration of a dislocation preventing portion 47 and the like is appropriately omitted (the same is true also for following embodiments).

A brake device 201, a friction couple for brake device 202, and a brake pad 204 of this embodiment illustrated in FIG. 12 are configured such that a bending amount of a central portion of a contact site of an absorbing member 46 as the absorbing portion with a contacting portion 41 becomes larger than the bending amount of an edge portion of the contact site of the absorbing member 46 with the contacting portion 41 when pressing force by an actuator 3 acts. Herein, the central portion of the contact site is a region in the vicinity of the center including the center of the contact site and is a region closer to the center than the edge of the contact site.

The brake pad 204 of this embodiment realizes a configuration in which a predetermined site of the absorbing member 46 is easily bent as described above by an installation hole 44a as a concave portion on an accommodating side and an escaping portion 245a as a concave portion on a bending side provided so as to be in a predetermined size relationship.

Specifically, the brake pad 204 is provided with the installation hole 44a, which accommodates the contacting portion 41, and the escaping portion 245a having a size equal to or larger than that of the installation hole 44a on a side opposite to the installation hole 44a across the absorbing member 46. As described above, the installation hole 44a is provided on a supporting member 44 as a cylindrical through-hole and the escaping portion 245a is provided on a supporting member 45 on a side opposite to the supporting member 44 across the absorbing member 46, furthermore, on the side opposite to a cage 43 as the cylindrical through-hole.

Central axis lines of the installation hole 44a and the escaping portion 245a in a pressing direction by the actuator 3 substantially conform to each other. Herein, the installation hole 44a and the escaping portion 245a are formed such that a diameter $\phi2$ of the escaping portion 245a is not smaller than a diameter $\phi1$ of the installation hole 44a, and is herein larger than the diameter $\phi1$. The installation hole 44a and the escaping portion 245a are formed such that the size relationship between the diameters $\phi1$ and $\phi2$ satisfies $\phi1 \leq \phi2$, herein $\phi1 < \phi2$.

In the brake pad 204 configured in the above-described manner, since the installation hole 44a and the escaping portion 245a are formed so as to satisfy $\phi1 \leq \phi2$, herein $\phi1 < \phi2$, when the pressing force by the actuator 3 acts and the absorbing member 46 receives reaction force from the cage 43, which composes the contacting portion 41, it is possible to allow the vicinity of the central portion of the contact site of the absorbing member 46 with the contacting portion 41 to be more easily deformed to be easily bent on a side of the escaping portion 245a as indicated by a dotted line in FIG. 12. According to this, the brake pad 204 can realize the configuration in which the bending amount of the vicinity of the central portion of the contact site of the absorbing member 46 with the cage 43 becomes larger than the bending amount of the edge portion of the contact site of the absorbing member 46 with the cage 43.

As a result, the bending amount of the vicinity of the central portion of the contact site of the absorbing member 46 with the cage 43 becomes larger than the bending amount of the edge portion thereof, so that the brake pad 204 can increase a displacement absorbing rate when the absorbing member 46 absorbs displacement of each contacting portion 41 in the pressing direction. According to this, the brake device 201 can make a contacting load between each rolling element 42, which composes each contacting portion 41, and a disk rotor 5 substantially uniform more accurately and can more surely inhibit an unbalanced load from generating on a surface of the brake pad 4 pressed against the disk rotor 5.

The brake device 201, the friction couple for brake device 202, and the brake pad 204 according to the above-described embodiment are configured such that the bending amount of the central portion of the contact site of the absorbing member 46 with the contacting portion 41 becomes larger than the bending amount of the edge portion of the contact site of the absorbing member 46 with the contacting portion 41 when the pressing force by the actuator 3 acts. Therefore, the brake device 201, the friction couple for brake device 202, and the brake pad 204 can more surely inhibit the unbalanced load from generating on the surface of the brake pad 204 pressed against the disk rotor 5, so that they can further stabilize a load on each friction contact point and further stabilize a friction area in the brake pad 204, thereby making friction performance more appropriate and further improving stability of the friction performance.

[Third Embodiment]

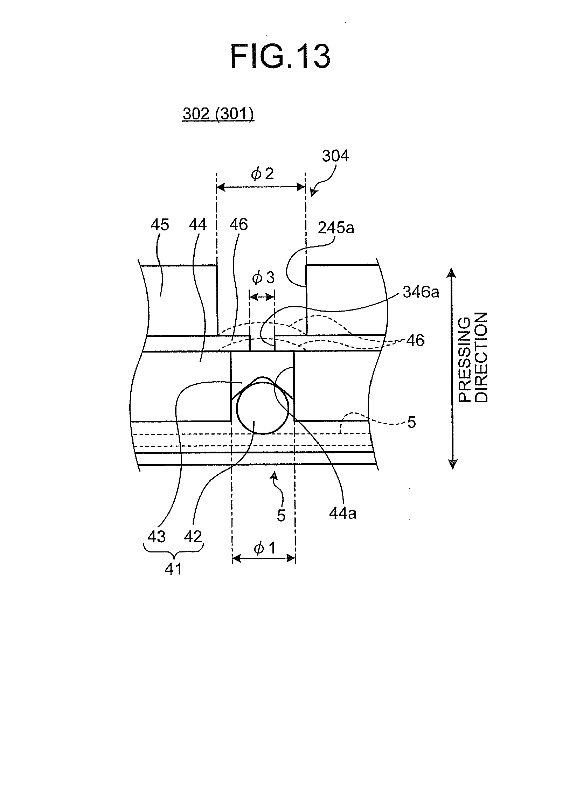

FIG. 13 is a schematic cross-sectional view of a friction couple for brake device according to a third embodiment. A brake device, the friction couple for brake device, and a brake pad according to the third embodiment are different from those of the second embodiment in that a through-hole is provided on an absorbing portion.

A brake device 301, a friction couple for brake device 302, and a brake pad 304 of this embodiment illustrated in FIG. 13 are configured such that a bending amount of a central portion of a contact site of an absorbing member 46 as the absorbing portion with a contacting portion 41 becomes larger than the bending amount of an edge portion of the contact site of the absorbing member 46 with the contacting portion 41 when pressing force by an actuator 3 acts.

The brake pad 304 of this embodiment is provided with a through-hole 346a on the absorbing member 46 in addition to an installation hole 44a as a concave portion on an accommodating side and an escaping portion 245a as a concave portion on a bending side provided in a predetermined size relationship. The absorbing member 46 is provided with the through-hole 346a on the central portion of the contact site with the contacting portion 41, herein, the contact site with the cage 43. The through-hole 346a is provided so as to penetrate through the absorbing member 46 in a cylindrical manner.

A central axis line in a pressing direction by the actuator 3 of the through-hole 346a substantially conforms to that of the installation hole 44a and the escaping portion 245a. Herein, the through-hole 346a is formed to have a diameter $\phi3$ smaller than a diameter $\phi1$ of the installation hole 44a. That is to say, the through-hole 346a, the installation hole 44a, and the escaping portion 245a are formed such that a size relationship among diameters $\phi1$, $\phi2$, and $\phi3$ satisfies $\phi3 < \phi1 \leq \phi2$, and herein satisfies $\phi3 < \phi1 < \phi2$.

In the brake pad 304 configured in the above-described manner, since the through-hole 346a is provided on the central portion of the contact site of the absorbing member 46 with the cage 43, it is possible to decrease rigidity of the vicinity of the central portion of the contact site of the absorbing member 46, in other words, it is possible to decrease a spring constant. As a result, in the brake pad 304, when the pressing force by the actuator 3 acts and the absorbing member 46 receives reaction force from the cage 43, which composes the contacting portion 41, it is possible to allow the vicinity of the central portion of the contact site of the absorbing member 46 with the contacting portion 41 to be more easily deformed to be more easily bent on a side of the escaping portion 245a as indicated by a dotted line in FIG. 13. According to this, the brake pad 304 can realize the configuration in which the bending amount of the vicinity of the central portion of the contact site of the absorbing member 46 with the cage 43 becomes larger than the bending amount of the edge portion of the contact site of the absorbing member 46 with the cage 43.

According to the brake device 301, the friction couple for brake device 302, and the brake pad 304 according to the above-described embodiment, the brake device 301, the friction couple for brake device 302, and the brake pad 304 can more surely inhibit an unbalanced load from generating on a surface of the brake pad 304 pressed against the disk rotor 5, so that they can further stabilize a load on each friction contact point and further stabilize a friction area in the brake pad 304, thereby making friction performance more appropriate and further improving stability of the friction performance.

Meanwhile, although the brake pad 304 is described to be provided with the through-hole 346a on the absorbing member 46 in addition to the installation hole 44a and the escaping portion 245a provided in the predetermined size relationship in the description above, there is no limitation and it is also possible to realize the configuration to make the bending amount of the vicinity of the central portion of the contact site of the absorbing member 46 with the cage 43 larger than the bending amount of the edge portion thereof only by the configuration in which the absorbing member 46 is provided with the through-hole 346a irrespective of the size relationship between the installation hole 44a and the escaping portion 245a.

[Fourth Embodiment]

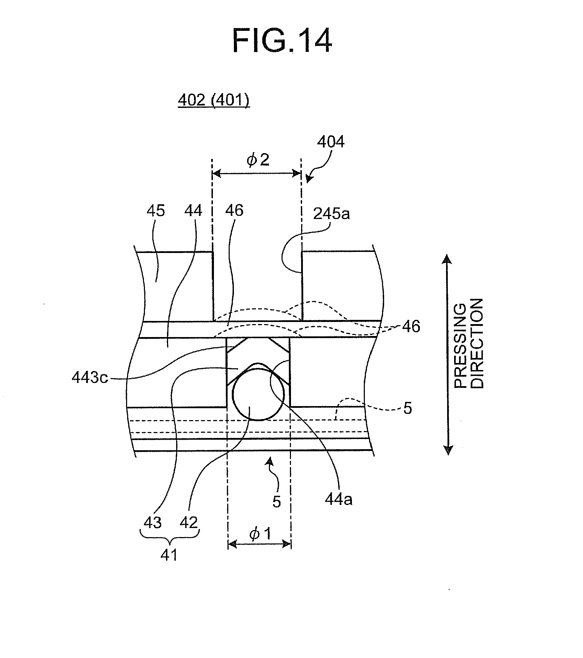

FIG. 14 is a schematic cross-sectional view of a friction couple for brake device according to a fourth embodiment. A brake device, a friction couple for brake device, and a brake pad according to the fourth embodiment are different from those of a third embodiment in that a projection is provided on a contacting portion in place of a through-hole of an absorbing member.

A brake device 401, a friction couple for brake device 402, and a brake pad 404 of this embodiment illustrated in FIG. 14 are configured such that a bending amount of a central portion of a contact site of an absorbing member 46 as an absorbing portion with a contacting portion 41 becomes larger than the bending amount of an edge portion of the contact site of the absorbing member 46 with the contacting portion 41 when pressing force by an actuator 3 acts.

The brake pad 404 of this embodiment is provided with a projection 443c on the contacting portion 41 in addition to an installation hole 44a as a concave portion on an accommodating side and an escaping portion 245a as a concave portion on a bending side provided in a predetermined size relationship. The contacting portion 41 includes the projection 443c projecting toward the absorbing member 46 on a central portion of a contact site with the absorbing member 46, herein the central portion of the contact site of a cage 43 with the absorbing member 46. The projection 443c may be provided as an inclined surface having predetermined inclination or as a curved surface having a predetermined curvature, for example. The projection 443c is formed such that an apex or a center of a top surface thereof substantially conforms to central axis lines of the installation hole 44a and the escaping portion 245a in a state in which the cage 43 is accommodated in the installation hole 44a.

The brake pad 404 configured in the above-described manner can decrease a contact surface area of the cage 43 with the absorbing member 46 by the through-hole 443c provided on the central portion of the contact site of the cage 43 with the absorbing member 46 and allow a load acting from the cage 43 on the absorbing portionmember 46 to concentrically act on the vicinity of the central portion of the contact site with the absorbing member 46. As a result, in the brake pad 404, when the pressing force by the actuator 3 acts and the absorbing member 46 receives reaction force from the cage 43, which composes the contacting portion 41, it is possible to allow the vicinity of the central portion of the contact site of the absorbing member 46 with the contacting portion 41 to be more easily deformed to be more easily bent on a side of the escaping portion 245a as indicated by a dotted line in FIG. 14. According to this, the brake pad 404 can realize the configuration in which the bending amount of the vicinity of the central portion of the contact site of the absorbing member 46 with the cage 43 becomes larger than the bending amount of the edge portion of the contact site of the absorbing member 46 with the cage 43.

According to the brake device 401, the friction couple for brake device 402, and the brake pad 404 according to the above-described embodiment, the brake device 401, the friction couple for brake device 402, and the brake pad 404 can more surely inhibit an unbalanced load from generating on a surface of the brake pad 404 pressed against the disk rotor 5, so that they can further stabilize the load on each friction contact point and further stabilize a friction area in the brake pad 404, thereby making friction performance more appropriate and further improving stability of the friction performance.

Meanwhile, although the brake pad 404 is described to be provided with the projection 443c on the cage 43 in addition to the installation hole 44a and the escaping portion 245a provided in the predetermined size relationship in the description above, there is no limitation, and it is also possible to realize the configuration to make the bending amount of the vicinity of the central portion of the contact site of the absorbing member 46 with the cage 43 larger than the bending amount of the edge portion thereof only by the configuration in which the cage 43 is provided with the projection 443c irrespective of the size relationship between the installation hole 44a and the escaping portion 245a.

[Fifth Embodiment]

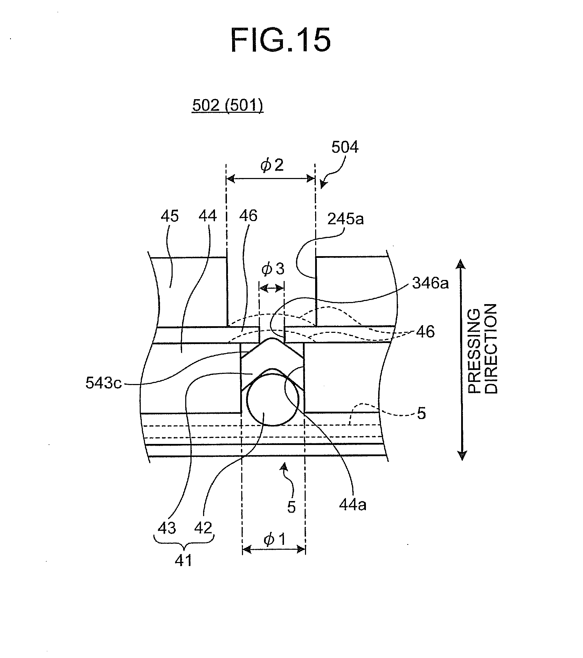

FIG. 15 is a schematic cross-sectional view of a friction couple for brake device according to a fifth embodiment.

A brake device, the friction couple for brake device, and a brake pad according to the fifth embodiment are different from those of the third and fourth embodiments in that they have both of a through-hole of an absorbing member and a projection of a contacting portion.

A brake device 501, a friction couple for brake device 502, and a brake pad 504 of this embodiment illustrated in FIG. 15 are configured such that a bending amount of a central portion of a contact site of an absorbing member 46 as an absorbing portion with a contacting portion 41 becomes larger than the bending amount of an edge portion of the contact site of the absorbing member 46 with the contacting portion 41 when pressing force by an actuator 3 acts.

The brake pad 504 of this embodiment is provided with a through-hole 346a on the absorbing member 46 and a projection 543c on the contacting portion 41 in addition to an installation hole 44a as a concave portion on an accommodating side and an escaping portion 245a as the concave portion on a bending side provided in a predetermined size relationship. Although the projection 543c has a configuration substantially similar to that of the above-described projection 443c (refer to FIG. 14), this is herein formed to fit into the through-hole 346a. That is to say, the absorbing member 46 of the brake pad 504 of this embodiment is provided with the through hole 346a on the central portion of the contact site with the contacting portion 41 and the contacting portion 41 includes the projection 543c, which fits into the through-hole 346a, on the central portion of the contact site of the cage 43 with the absorbing member 46.

In the brake pad 504 configured in the above-described manner, since the through-hole 346a is provided on the central portion of the contact site of the absorbing member 46 with the cage 43 and the projection 543c is provided on the central portion of the contact site of the cage 43 with the absorbing member 46, it is possible to allow the vicinity of the central portion of the contact site of the absorbing member 46 with the contacting portion 41 to be more easily deformed to be more easily bent on a side of the escaping portion 245a as indicated by a dotted line in FIG. 15 when the pressing force by the actuator 3 acts and the absorbing member 46 receives reaction force from the cage 43, which composes the contacting portion 41. According to this, the brake pad 504 can realize the configuration in which the bending amount of the vicinity of the central portion of the contact site of the absorbing member 46 with the cage 43 becomes larger than the bending amount of the edge portion of the contact site of the absorbing member 46 with the cage 43.

The brake pad 504 can allow the central portion of the contact site of the absorbing member 46 with the cage 43 to be easily bent by fit of the projection 543c into the through-hole 346a, and surely position the projection 543c on the central portion, which is easily bent, thereby surely positioning a central position of the cage 43, which composes the contacting portion 41, in the vicinity of the central portion. Therefore, the brake pad 504 can more surely inhibit an unbalanced load from generating on a surface pressed against a disk rotor 5.

According to the brake device 501, the friction couple for brake device 502, and the brake pad 504 according to the above-described embodiment, the brake device 501, the friction couple for brake device 502, and the brake pad 504 can more surely inhibit the unbalanced load from generating on the surface of the brake pad 504 pressed against the disk rotor 5, so that they can further stabilize a load on each friction contact point and further stabilize a friction area in the brake pad 504, thereby making friction performance more appropriate and further improving stability of the friction performance.

[Sixth Embodiment]

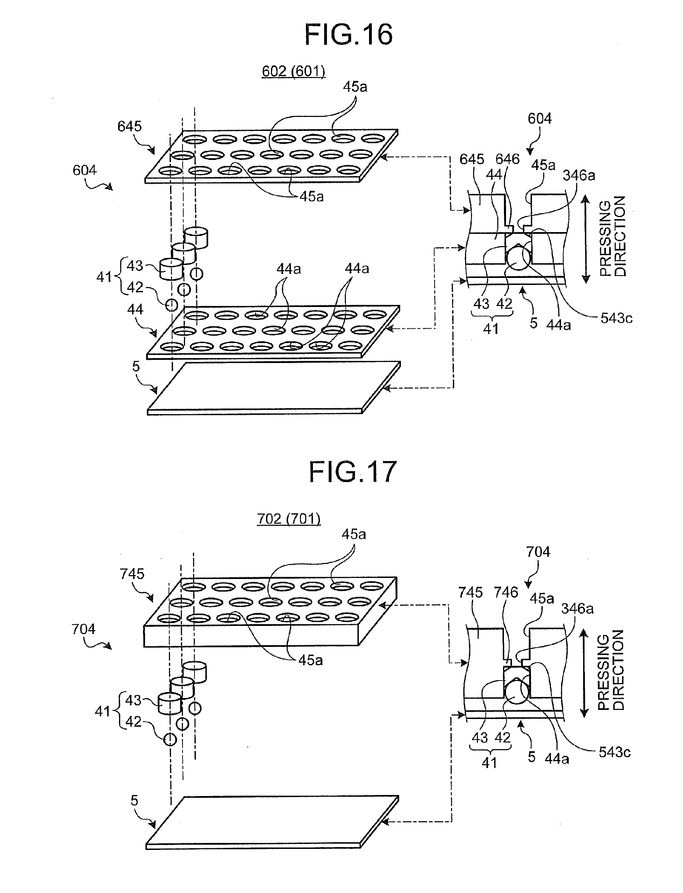

FIG. 16 is a schematic exploded perspective view illustrating a layered structure of a friction couple for brake device according to a sixth embodiment. A brake device, the friction couple for brake device, and a brake pad according to the sixth embodiment are different from those of the first embodiment in that a part of a supporting portion doubles as an absorbing portion.

A brake device 601, a friction couple for brake device 602, and a brake pad 604 of this embodiment illustrated in FIG. 16 are provided with a supporting member 44 and a supporting member 645 as a supporting portion, which supports a contacting portion 41. In the brake pad 604 of this embodiment, a part of the supporting member 645 doubles as an absorbing portion 646. The supporting member 645 and the absorbing portion 646 are integrally formed. The supporting member 645 and the absorbing portion 646 are typically formed of a material having relatively high heat resistance and predetermined or higher strength such as titan, stainless, and a soft metal material, which is relatively easily deformed, and are integrally formed by means of press work and the like, for example. That is to say, in the brake pad 604, the supporting members 44 and 645 and the absorbing portion 646 are composed of two pieces. According to this, it is possible to reduce the number of components of the brake device 601, the friction couple for brake device 602, and the brake pad 604 and to control a manufacturing cost by controlling the number of manufacturing steps, for example.

Specifically, the absorbing portion 646 is provided on a side of a surface of the supporting member 645 opposed to the supporting member 44. The absorbing portion 646 is provided on a side of an end opposed to an installation hole 44a of an escaping portion 45a in the supporting member 645. That is to say, the absorbing portion 646 is located between the installation hole 44a and the escaping portion 45a in a pressing direction by an actuator 3. The absorbing portion 646 can absorb displacement of the contacting portion 41 accommodated in the installation hole 44a, herein, a cage 43 accommodated in the installation hole 44a, thereby absorbing the displacement of a rolling element 42, which composes the contacting portion 41.

Meanwhile, although the brake pad 604 is herein illustrated to be provided with the above-described through-hole 346a provided on an absorbing portion 46 and a projection 543c provided on the cage 43 of the contacting portion 41, there is no limitation.

In the brake device 601 configured as in the above-described manner, a plurality of contacting portions 41 are independently provided, and the absorbing portion 646 can absorb the displacement of each contacting portion 41. Therefore, in the brake device 601, when pressing force by the actuator 3 acts on the supporting member 45, the absorbing portion 646 deforms by reaction force received from the cage 43, which composes the contacting portion 41, to be herein bent on a side of the escaping portion 45a, thereby absorbing the displacement of each contacting portion 41 in the pressing direction, so that the pressing force is dispersed by the absorbing portion 646 to substantially uniformly act on a plurality of cages 43. According to this, the brake device 601 can make a contacting load between each rolling element 42, which composes each contacting portion 41, and a disk rotor 5 substantially uniform for each rolling element 42, thereby inhibiting a pressing load from acting on a specific place in an unbalanced manner on a surface of the brake pad 604 pressed against the disk rotor 5 (surface opposed to an abutment surface 5a) to generate an unbalanced load. As a result, the brake device 601 can further stabilize the load on each friction contact point and stabilize a friction area in the brake pad 604, thereby making friction performance appropriate and improving stability of the friction performance. According to this, the brake device 601 can further uniformize an abrasion state of each rolling element 42.

According to the brake device 601, the friction couple for brake device 602, and the brake pad 604 according to the above-described embodiment, since the absorbing portion 646 can absorb the displacement of the contacting portion 41, the brake device 601, the friction couple for brake device 602, and the brake pad 604 can stabilize an area of a friction place, thereby making the friction performance appropriate.

[Seventh Embodiment]

FIG. 17 is a schematic exploded perspective view illustrating a layered structure of a friction couple for brake device according to a seventh embodiment. A brake device, the friction couple for brake device, and a brake pad according to the seventh embodiment are similar to those of the sixth embodiment in that a part of a supporting portion doubles as an absorbing portion but are different from those of the sixth embodiment in a manner how the supporting portion doubles as the absorbing portion.

A brake device 701, a friction couple for brake device 702, and a brake pad 704 of this embodiment illustrated in FIG. 17 are provided with a supporting member 745 as a supporting portion, which supports a contacting portion 41. In the brake pad 704 of this embodiment, a part of the supporting member 745 doubles as an absorbing portion 746. The supporting member 745 and the absorbing portion 746 are integrally formed. The supporting member 745 and the absorbing portion 746 are typically formed of a material having relatively high heat resistance and predetermined or higher strength such as titan, stainless, and a soft metal material, which is relatively easily deformed, and are integrally formed by means of press work and the like, for example. That is to say, in the brake pad 704, the supporting member 745 and the absorbing portion 746 are composed of a single piece. According to this, it is possible to further reduce the number of components of the brake device 701, the friction couple for brake device 702, and the brake pad 704 and to further control a manufacturing cost by further controlling the number of manufacturing steps, for example.

Specifically, in the supporting member 745, an installation hole 44a, an escaping portion 45a, and the absorbing portion 746 are formed. The absorbing portion 746 is located between the installation hole 44a and the escaping portion 45a in a pressing direction by an actuator 3. That is to say, the supporting member 745 is formed such that the installation hole 44a and the escaping portion 45a are opposed to each other across the absorbing portion 746 in the pressing direction by the actuator 3. The absorbing portion 746 can absorb displacement of the contacting portion 41 accommodated in the installation hole 44a, herein, a cage 43 accommodated in the installation hole 44a, thereby absorbing the displacement of a rolling element 42, which composes the contacting portion 41.

Meanwhile, the brake pad 704 is herein preferably provided with the above-described drop preventing tool (not illustrated). The drop preventing tool is formed separately from the supporting member 745. The drop preventing tool is provided with a dislocation preventing portion 47 (refer to FIG. 1) and is fixed to a surface of the supporting member 745 on a side pressed against a disk rotor 5.

According to the brake device 701, the friction couple for brake device 702, and the brake pad 704 according to the above-described embodiment, since the absorbing portion 746 can absorb the displacement of the contacting portion 41, the brake device 701, the friction couple for brake device 702, and the brake pad 704 can stabilize an area of a friction place, thereby making friction performance appropriate.

[Eighth Embodiment]

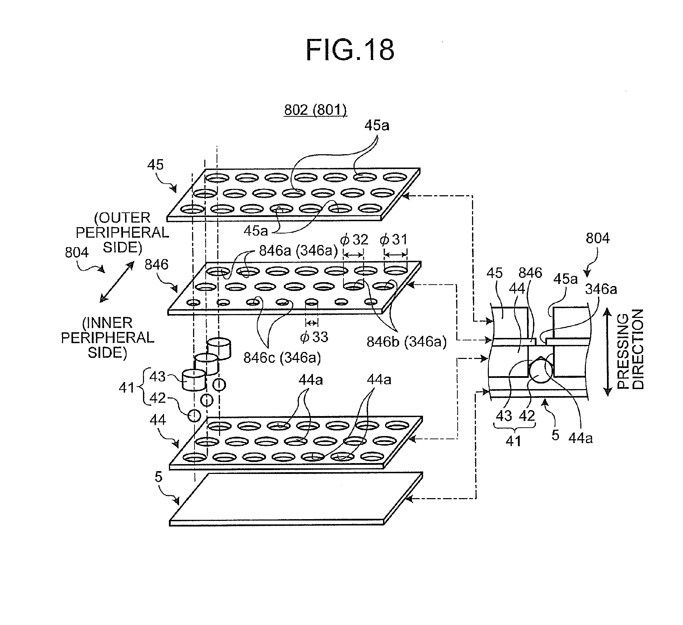

FIG. 18 is a schematic exploded perspective view illustrating a layered structure of a friction couple for brake device according to an eighth embodiment. A brake device, the friction couple for brake device, and a brake pad according to the eighth embodiment are different from those of the first embodiment in that a spring constant of a contact site of an absorbing portion with a contacting portion differs depending on a position.

A brake device 801, a friction couple for brake device 802, and a brake pad 804 of this embodiment illustrated in FIG. 18 include an absorbing member 846 as an absorbing portion. In the absorbing member 846, the spring constant of the contact site differs depending on the position of the contact site with the contacting portion 41, herein, the cage 43, which composes the contacting portion 41. Furthermore, in the absorbing member 846, the spring constant of the contact site differs depending on the position of the contact site with the cage 43 on a surface on a side pressed against a disk rotor 5 (surface opposed to an abutment surface 5a) in the brake pad 804.

For example, in the brake device 801, a load on an outer peripheral side of the brake pad 804 tends to be relatively large and the load on an inner peripheral side thereof tends to be relatively small as described above. Herein, the brake pad 804 makes friction performance more appropriate by making the spring constant of the contact site of the absorbing member 846 different so as to correspond to load distribution according to such a property and the like of a caliper 6. That is to say, the absorbing member 846 has a configuration in which the spring constant of the contact site differs depending on the position of the contact site with the cage 43, and according to this, this has the configuration in which the spring constant of the contact site differs according to magnitude of pressing force acting on the contact site.

Specifically, the absorbing member 846 is provided with a through-hole 346a on a central portion of the contact site with the contacting portion 41, herein the contact site with the cage 43. In the absorbing member 846, a size of the through-hole 346a differs depending on the position of the contact site with the cage 43. In other words, in the absorbing member 846, a size of the through-hole 346a differs depending on the magnitude of the pressing force acting on the contact site.

In the absorbing member 846, a diameter $\phi31$ of an outer through-hole 846a, which is the through-hole 346a on the outer peripheral side of the brake pad 804, is set to be relatively large and a diameter $\phi33$ of an inner through-hole 846c, which is the through-hole 346a on the inner peripheral side of the brake pad 804, is set to be relatively small. In the absorbing member 846, a diameter $\phi32$ of an intermediate through-hole 846b, which is the through-hole 346a between the outer through-hole 846a and the inner through-hole 846c, is set to be smaller than the diameter $\phi31$ and larger than the diameter $\phi33$.

That is to say, on the absorbing member 846, the outer through-hole 846a, the intermediate through-hole 846b, and the inner through-hole 846c are formed so as to satisfy $\phi31 > \phi32 > \phi33$. As a result, in the absorbing member 846, the spring constant of the contact site on the outer peripheral side on which the relatively large outer through-hole 846a is provided becomes relatively small and the spring constant of the contact site on the inner peripheral side on which the relatively small inner through-hole 846c is provided becomes relatively large.

In the brake device 801 configured in the above-described manner, since the spring constant of the contact site on the outer peripheral side of the absorbing member 846 is relatively small and the spring constant of the contact site on the inner peripheral side is relatively large, it is possible to allow the contact site on the outer peripheral side on which the relatively large load acts to be easily deformed and allow the contact site on the inner peripheral side on which the relatively small load acts to be deformed with difficulty. In the brake device 801, when the pressing force by the actuator 3 acts on the supporting member 45 and the absorbing member 846 deforms by reaction force received from the cage 43, which composes the contacting portion 41, to absorb the displacement of each contacting portion 41 in the pressing direction, an absorbing amount of the displacement of the contact site on the outer peripheral side of the absorbing member 846 becomes relatively large and the absorbing amount of the displacement of the contact site on the inner peripheral side becomes relatively small. According to this, the brake device 801 can make a contacting load between each rolling element 42, which composes each contacting portion 41, and the disk rotor 5 substantially uniform for each rolling element 42 so as to correspond to the load distribution according to the property and the like of the caliper 6, thereby more appropriately inhibiting an unbalanced load from generating. As a result, the brake device 801 can further stabilize the load on each friction contact point and stabilize a friction area in the brake pad 804, thereby making the friction performance more appropriate and improving stability of the friction performance.

According to the brake device 801, the friction couple for brake device 802, and the brake pad 804 according to the above-described embodiment, in the absorbing member 846, the spring constant of the contact site differs depending on the position of the contact site with the contacting portion 41. Therefore, the brake device 801, the friction couple for brake device 802, and the brake pad 804 can make the friction performance more appropriate so as to correspond to the load distribution according to the property of the caliper 6 and the like, for example.

Meanwhile, although it is described that the absorbing member 846 is configured such that the spring constant of the contact site on the outer peripheral side becomes relatively small and the spring constant of the contact site on the inner peripheral side becomes relatively large in the description above, there is no limitation, and they can be appropriately set depending on the position of the contact site with the contacting portion 41 according to the property and the like of the caliper 6. The absorbing member 846 may be set such that the spring constant of the contact site with the contacting portion 41, in other words, that the size of the through-hole 346a differs between an inner pad and an outer pad, that is to say, depending on the position in the pressing direction by the actuator 3 so as to correspond to swing and the like of the caliper 6, for example.

[Ninth Embodiment]

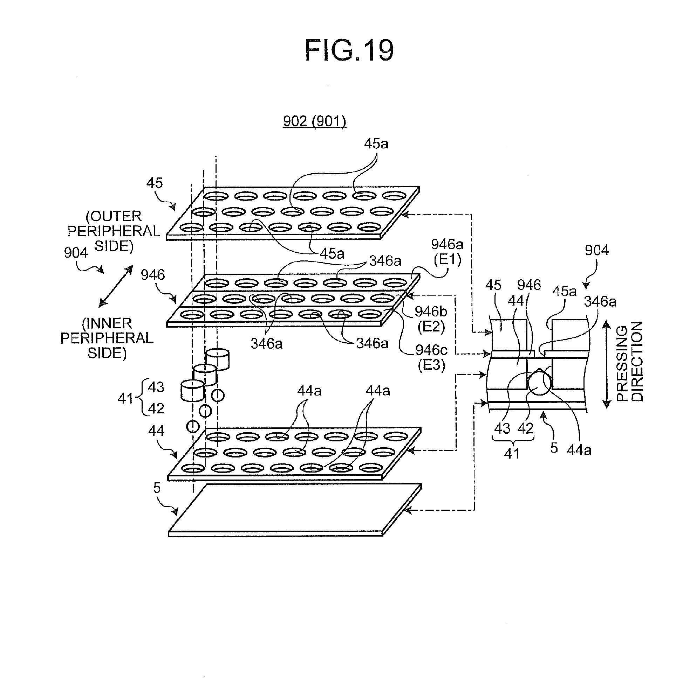

FIG. 19 is a schematic exploded perspective view illustrating a layered structure of a friction couple for brake device according to a ninth embodiment. A brake device, the friction couple for brake device, and a brake pad according to the ninth embodiment have a configuration for making a spring constant of a contacting portion different from that of the eighth embodiment.

A brake device 901, a friction couple for brake device 902, and a brake pad 904 of this embodiment illustrated in FIG. 19 include an absorbing member 946 as an absorbing portion. In the absorbing member 946, the spring constant of a contact site differs depending on a position of the contact site with a contacting portion 41, herein a cage 43, which composes the contacting portion 41. Furthermore, in the absorbing member 946, the spring constant of the contact site differs depending on the position of the contact site with the cage 43 on a surface on a side pressed against a disk rotor 5 (surface opposed to an abutment surface 5a) in the brake pad 904.

Specifically, the absorbing member 946 is provided with a through-hole 346a on a central portion of the contact site with the contacting portion 41, herein the contact site with the cage 43. In the absorbing member 946, an elastic modulus of the contact site differs depending on the position of the contact site with the contacting portion 41. In other words, in the absorbing member 946, the elastic modulus of the contact site differs according to magnitude of pressing force, which acts on the contact site.

Specifically, the absorbing member 946 is composed of a plurality of members having different elastic moduli represented by a so-called Young's modulus, a volume elasticity modulus, a rigidity modulus, a Poisson's ratio and the like. For example, in the absorbing member 946, a Young's modulus E1 of an outer absorbing portion 946a located on an outer peripheral side of the brake pad 904 is set to be relatively small and a Young's modulus E3 of an inner absorbing portion 946c located on an inner peripheral side of the brake pad 904 is set to be relatively large. In the absorbing member 946, a Young's modulus E2 of an intermediate absorbing portion 946b between the outer absorbing portion 946a and the inner absorbing portion 946c is set to be larger than the Young's modulus E1 and smaller than the Young's modulus E3.

That is to say, the absorbing member 946 is composed such that the outer absorbing portion 946a, the intermediate absorbing portion 946b, and the inner absorbing portion 946c satisfy $E3 > E2 > E1$. As a result, in the absorbing member 946, the spring constant of the contact site on the outer peripheral side on which the Young's modulus is relatively small becomes relatively small, and the spring constant of the contact site on the inner peripheral side on which the Young's modulus is relatively large becomes relatively large.

In the brake device 901 configured in the above-described manner, since the spring constant of the contact site on the outer peripheral side of the absorbing member 946 is relatively small and the spring constant of the contact site on the inner peripheral side is relatively large, it is possible to allow the contact site on the outer peripheral side on which a relatively large load acts to be easily deformed and allow the contact site on the inner peripheral side on which a relatively small load acts to be deformed with difficulty. In the brake device 901, when the pressing force by an actuator 3 acts on a supporting member 45 and an absorbing member 846 deforms by reaction force received from the cage 43, which composes the contacting portion 41, to absorb displacement of each contacting portion 41 in a pressing direction, an absorbing amount of the displacement of the contact site on the outer peripheral side of the absorbing member 946 becomes relatively large and the absorbing amount of the displacement of the contact site on the inner peripheral side becomes relatively small. According to this, the brake device 901 can make a contacting load between each rolling element 42, which composes each contacting portion 41, and the disk rotor 5 substantially uniform for each rolling element 42 so as to correspond to load distribution according to a property and the like of a caliper 6, thereby more appropriately inhibiting an unbalanced load from generating. As a result, the brake device 901 can further stabilize the load on each friction contact point and stabilize a friction area in the brake pad 904, thereby making friction performance more appropriate and improving stability of the friction performance.

According to the brake device 901, the friction couple for brake device 902, and the brake pad 904 according to the above-described embodiment, in the absorbing member 946, the spring constant of the contact site differs depending on the position of the contact site with the contacting portion 41. Therefore, the brake device 901, the friction couple for brake device 902, and the brake pad 904 can make the friction performance more appropriate so as to correspond to the load distribution according to the property and the like of the caliper 6, for example.

[Tenth Embodiment]

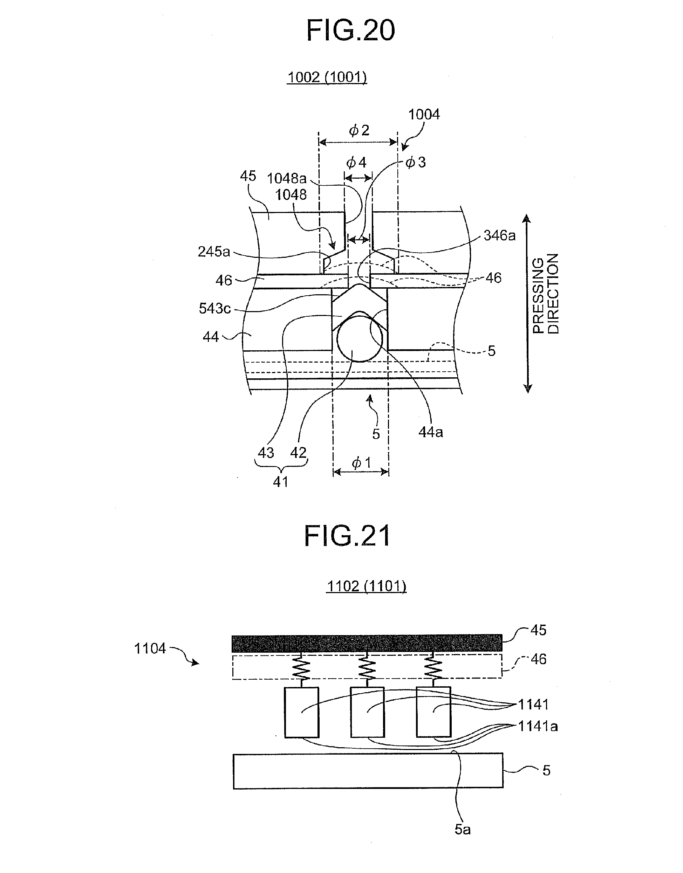

FIG. 20 is a schematic cross-sectional view of a friction couple for brake device according to a tenth embodiment. A brake device, the friction couple for brake device, and a brake pad according to the tenth embodiment are different from those of the fifth embodiment in that they are provided with a dislocation preventing portion.

A brake device 1001, a friction couple for brake device 1002, and a brake pad 1004 of this embodiment illustrated in FIG. 20 are provided with a dislocation preventing portion 1048. The dislocation preventing portion 1048 is provided on a side opposite to a contacting portion 41 across an absorbing member 46 for preventing the contacting portion 41 from dropping.

A supporting member 45 of this embodiment is provided with a reduced-diameter portion 1048a continuously formed from an escaping portion 245a on a side opposite to the absorbing member 46 (rear surface side) of the escaping portion 245a. The reduced-diameter portion 1048a is provided as a cylindrical hole.

A central axis line of the reduced-diameter portion 1048a in a pressing direction by an actuator 3 substantially conforms to that of an installation hole 44a, the escaping portion 245a, and a through-hole 346a. The reduced-diameter portion 1048a is formed to have a diameter $\phi 4$ smaller than the diameter of a cage 43 and is typically formed to have the diameter smaller than a diameter $\phi 1$ of the installation hole 44a. According to this, in the brake pad 1004, the dislocation preventing portion 1048 is formed in a portion in which the escaping portion 245a and the reduced-diameter portion 1048a are continuously formed of the supporting member 45. Herein, the installation hole 44a, the escaping portion 245a, the through-hole 346a, and the reduced-diameter portion 1048a are formed such that a size relationship among diameters $\phi 1$, $\phi 2$, $\phi 3$, and $\phi 4$ satisfies $\phi 3 < \phi 4 < \phi 1 < \phi 2$.

In the brake device 1001 configured in the above-described manner, even when the absorbing member 46 is plastically deformed by large force, since the cage 43 of the contacting portion 41 abuts the dislocation preventing portion 1048 of the supporting member 45, that is to say, an inclined surface portion in which the escaping portion 245a and the reduced-diameter portion 1048a are continuously formed and movement on the rear surface side (side opposite to the absorbing member 46 of the escaping portion 245a) is regulated, the contacting portion 41 can be prevented from dropping.

According to the brake device 1001, the friction couple for brake device 1002, and the brake pad 1004 according to the above-described embodiment, the brake pad 1004 includes the dislocation preventing portion 1048, which prevents the contacting portion 41 from dropping, on the side opposite to the contacting portion 41 across the absorbing member 46. Therefore, since the brake pad 1004 includes the dislocation preventing portion 1048, the brake device 1001, the friction couple for brake device 1002, and the brake pad 1004 can prevent the contacting portion 41 from dropping and appropriately improve friction performance.

[Eleventh Embodiment]

FIG. 21 is a schematic diagram explaining an absorbing member of a brake pad according to an eleventh embodiment. A configuration of a contacting portion of a brake device, a friction couple for brake device, and the brake pad according to the eleventh embodiment is different from that of the first embodiment.

A brake device 1101, a friction couple for brake device 1102, and a brake pad 1104 of this embodiment illustrated in FIG. 21 include a contacting portion 1141. Different from a contacting portion 41 (refer to FIG. 1 and the like), the contacting portion 1141 is formed of a friction material in place of a rolling element 42 (refer to FIG. 1 and the like) and a cage 43 (refer to FIG. 1 and the like) of hard materials. The contacting portion 1141 is typically formed of a material having relatively high abrasion resistance, a relatively high friction coefficient, and relatively high heat resistance such as a composite material. The brake pad 1104 of this embodiment includes a plurality of contacting portions 1141 and an absorbing member 46 capable of absorbing displacement of a plurality of contacting portions 1141.

In the brake device 1101 configured as in the above-described manner, when the brake pad 1104 is pressed against a disk rotor 5, which rotates, a friction surface 1141a of each contacting portion 1141 abuts an abutment surface 5a of the disk rotor 5, and each friction surface 1141a slides against the abutment surface 5a according to rotation of the disk rotor 5. The brake device 1101 can generate braking force to brake the rotation of the disk rotor 5 by frictional force (frictional resistance force) generated between each friction surface 1141a of each contacting portion 1141 and the abutment surface 5a. The brake device 1101 can brake relative displacement by the frictional force generated between each friction surface 1141a and the abutment surface 5a in association with the relative displacement between the brake pad 1104 and the disk rotor 5 in a state in which the brake pad 1104 is pressed against the disk rotor 5. As a result, the brake device 1101 can apply predetermined braking force to the disk rotor 5 and eventually to a wheel.

In the brake device 1101, a plurality of contacting portions 1141 are independently provided and the absorbing member 46 can absorb displacement of each contacting portion 1141. Therefore, in the brake device 1101, when pressing force by an actuator 3 acts on a supporting member 45, the absorbing member 46 deforms by reaction force received from each contacting portion 1141, thereby absorbing the displacement of each contacting portion 1141 in the pressing direction, so that the pressing force is dispersed by the absorbing member 46 to substantially uniformly act on a plurality of contacting portions 1141. According to this, the brake device 1101 can make a contacting load between each friction surface 1141a of each contacting portion 1141 and the abutment surface 5a of the disk rotor 5 substantially uniform for each contacting portion 1141, thereby inhibiting a pressing load from acting on a specific place in an unbalanced manner on a surface of the brake pad 1104 pressed against the disk rotor 5 (surface opposed to the abutment surface 5a) to generate an unbalanced load. As a result, the brake device 1101 can further stabilize the load on each friction surface 1141a and stabilize a friction area in the brake pad 1104, thereby making friction performance appropriate and improving stability of the friction performance. According to this, the brake device 1101 can further uniformize an abrasion state of each contacting portion 1141.

For example, in the brake device 1101, even in a case in which the brake pad 1104 is thermally expanded to deform such that the vicinity of a central portion of a surface thereof opposed to the abutment surface 5a projects by friction heat and the like generated at the time of braking, since a plurality of contacting portions 1141 are independently provided and the absorbing member 46 can absorb the displacement of each contacting portion 1141, it is possible to stabilize the friction area as described above, thereby making the friction performance appropriate also for thermal expansion of the brake pad 1104.

The brake device 1101 according to the above-described embodiment is provided with the brake pad 1104 including a plurality of contacting portions 1141 and the absorbing member 46 capable of absorbing the displacement of a plurality of contacting portions 1141, the disk rotor 5 provided so as to be in contact with a plurality of contacting portions 1141 and so as to be relatively displaced with respect to the brake pad 1104, and the actuator 3, which presses the brake pad 1104 against the disk rotor 5. The friction couple for brake device 1102 according to the above-described embodiment is provided with the brake pad 1104 including a plurality of contacting portions 1141 and the absorbing member 46 capable of absorbing the displacement of a plurality of contacting portions 1141 and the disk rotor 5 provided so as to be in contact with a plurality of contacting portions 1141 and so as to be relatively displaced with respect to the brake pad 1104. The brake pad 1104 according to the above-described embodiment is provided with a plurality of contacting portions 1141, which are in contact with the disk rotor 5 rotating together with the wheel, and the absorbing member 46 capable of absorbing the displacement of a plurality of contacting portions 1141. Therefore, since the absorbing member 46 can absorb the displacement of a plurality of contacting portions 1141, the brake device 1101, the friction couple for brake device 1102, and the brake pad 1104 can stabilize an area of a friction place, thereby making the friction performance appropriate.

[Twelfth Embodiment]

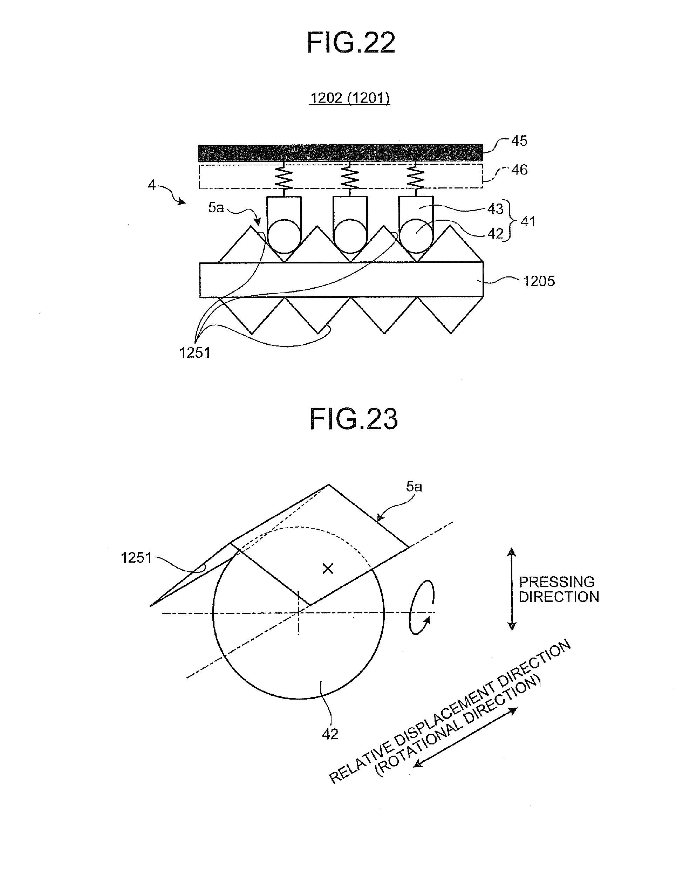

FIG. 22 is a schematic diagram explaining an absorbing member of a brake pad according to a twelfth embodiment and FIG. 23 is a perspective view schematically illustrating a surface shape of an abutment surface of a disk rotor against a rolling element according to the twelfth embodiment. A brake device, a friction couple for brake device, and the brake pad according to the twelfth embodiment are different from those of the first embodiment in that a second member includes an accommodating groove.

In a brake device 1201, a friction couple for brake device 1202, and a brake pad 4 of this embodiment illustrated in FIG. 22, a disk rotor 1205 as the second member includes an accommodating groove 1251. The disk rotor 1205 includes the accommodating groove 1251 on a contact portion with a rolling element 42, that is to say, on an abutment surface 5a. The accommodating groove 1251 is formed in a direction of relative displacement between the brake pad 4 and the disk rotor 1205, that is to say, in a rotational direction of the disk rotor 1205 to accommodate a part of the rolling element 42. The accommodating groove 1251 herein has a cross-section in a V-shape in a direction perpendicular to the rotational direction of the disk rotor 1205 as illustrated in FIG. 23. A plurality of accommodating grooves 1251 are provided on positions, which can be opposed to the rolling element 42, in a pressing direction by an actuator 3. Meanwhile, the accommodating groove 1251 may be provided by welding of a V-groove plate provided with the accommodating groove 1251 on a circular disk-shaped main body of the disk rotor 1205 or may be provided integrally with the circular disk-shaped main body of the disk rotor 1205 by means of press working and the like. The shape of the cross-section of the accommodating groove 1251 is not limited to the above-described V-shape.

The disk rotor 1205 configured in the above-described manner can appropriately guide rotation (roll) of the rolling element 42 in association with the relative displacement with respect to the brake pad 4 and can decrease a thickness of the friction couple for brake device 1202 in the pressing direction because a part of the rolling element 42 is accommodated in the accommodating groove 1251.

Since the disk rotor 1205 includes the accommodating groove 1251 on the abutment surface 5a, the brake device 1201 can relatively increase the number of contact places between the rolling element 42 and the abutment surface 5a as compared to a case in which the abutment surface 5a is flat, for example. Since the disk rotor 1205 includes the accommodating groove 1251 on the abutment surface 5a, the brake device 1201 can make a surface area of the disk rotor 1205 relatively large as compared to a case in which the abutment surface 5a is flat, for example. As a result, the brake device 1201 can improve cooling performance, thereby inhibiting overheat of the friction couple for brake device 1202, for example, to inhibit so-called fade from generating.

According to the brake device 1201, the friction couple for brake device 1202, and the brake pad 4 according to the above-described embodiment, the disk rotor 1205 includes the accommodating groove 1251 formed on the contact portion with the rolling element 42 in the direction of the relative displacement between the brake pad 4 and the disk rotor 1205 for accommodating a part of the rolling element 42. Therefore, the brake device 1201, the friction couple for brake device 1202, and the brake pad 4 can improve the cooling performance.

[Thirteenth Embodiment]

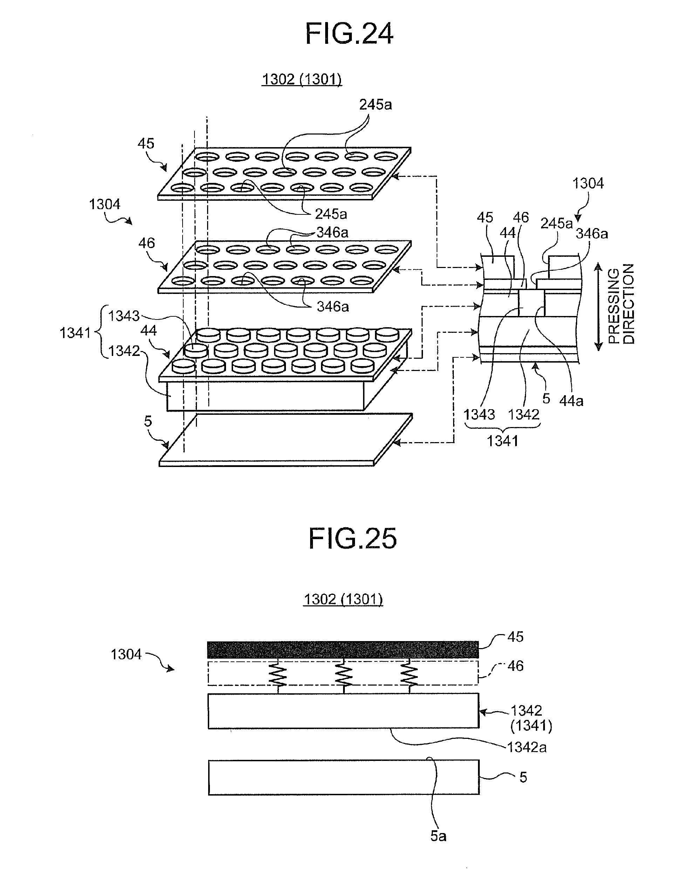

FIG. 24 is a schematic exploded perspective view illustrating a layered structure of a friction couple for brake device according to a thirteenth embodiment and FIG. 25 is a schematic diagram explaining an absorbing member of a brake pad according to the thirteenth embodiment. A configuration of a contacting portion of a brake device, the friction couple for brake device, and the brake pad according to the thirteenth embodiment is different from that of the third embodiment.

A brake device 1301, a friction couple for brake device 1302, and a brake pad 1304 of this embodiment illustrated in FIG. 24 include a contacting portion 1341. The brake pad 1304 of this embodiment includes the contacting portion 1341 and an absorbing member 46 as an absorbing portion capable of absorbing displacement of the contacting portion 1341 at a plurality of contact sites.

Specifically, different from a contacting portion 41 (refer to FIG. 13 and the like), the contacting portion 1341 includes a friction material 1342 and a projection 1343 in place of a rolling element 42 of a hard material (refer to FIG. 13 and the like) and a cage 43 (refer to FIG. 13 and the like). The friction material 1342 is typically formed of a material having relatively high abrasion resistance, a relatively high friction coefficient, and relatively high heat resistance such as a composite material.

In the brake pad 1304, a plurality of projections 1343 are provided on one friction material 1342. The contacting portion 1341 is assembled to supporting members 44 and 45 such that each projection 1343 is accommodated in each installation hole 44a. A projecting amount of each projection 1343 is set such that a slight gap is formed between the supporting member 44 and the absorbing member 46 (or between the supporting member 44 and the friction material 1342) in a state in which each projection 1343 is accommodated in each installation hole 44a. In the brake pad 1304, each projection 1343 is elastically supported by the absorbing member 46.

The absorbing member 46 individually elastically supports a plurality of projections 1343 as illustrated in FIG. 25. The absorbing member 46 elastically deforms to allow displacement of each projection 1343 in a pressing direction by an actuator 3. The absorbing member 46 lies between the supporting member 45 and a plurality of projections 1343, elastically deforms when pressing force by the actuator 3 acts and disperses the above-described pressing force according to the deformation, thereby allowing the pressing force to act substantially uniformly on a plurality of projections 1343.

In the brake device 1301 configured as in the above-described manner, when the brake pad 1304 is pressed against the disk rotor 5, which rotates, a friction surface 1342a of the friction material 1342, which composes the contacting portion 1341, abuts an abutment surface 5a of the disk rotor 5 and the friction surface 1342a slides against the abutment surface 5a according to the rotation of the disk rotor 5. Then, the brake device 1301 can generate braking force to brake the rotation of the disk rotor 5 by frictional force (frictional resistance force) generated between the friction surface 1342a of the contacting portion 1341 and the abutment surface 5a. The brake device 1301 can brake relative displacement by the frictional force generated between the friction surface 1342a and the abutment surface 5a in association with the relative displacement between the brake pad 1304 and the disk rotor 5 in a state in which the brake pad 1304 is pressed against the disk rotor 5. As a result, the brake device 1301 can apply predetermined braking force to the disk rotor 5 and eventually to a wheel.

In brake device 1301, the absorbing member 46 can absorb the displacement of the contacting portion 1341 at a plurality of contact sites. Therefore, in the brake device 1301, when the pressing force by the actuator 3 acts on the supporting member 45, the absorbing member 46 deforms by reaction force received from the contacting portion 1341 through the projection 1343, thereby individually absorbing the displacement of the contacting portion 1341 in the pressing direction at a plurality of contact sites, so that the pressing force is dispersed by the absorbing member 46 to be substantially uniformly act on a plurality of projections 1343. According to this, the brake device 1301 can make a contacting load between the friction surface 1342a of the friction material 1342 of the contacting portion 1341 and the abutment surface 5a of the disk rotor 5 substantially uniform in the contacting portion 1341 and can inhibit a pressing load from acting on a specific place in an unbalanced manner on a surface of the brake pad 1304 pressed against the disk rotor 5 (surface opposed to the abutment surface 5a) to generate an unbalanced load. As a result, the brake device 1301 can stabilize the load on the friction surface 1342a and stabilize a friction area in the brake pad 1304, thereby making friction performance appropriate and improving stability of the friction performance. Also, according to this, the brake device 1301 can further uniformize an abrasion state of the contacting portion 1341.

The brake device 1301 according to the above-described embodiment is provided with the brake pad 1304 including the contacting portion 1341 and the absorbing member 46 capable of absorbing the displacement of the contacting portion 1341 at a plurality of contact sites, the disk rotor 5 provided so as to be in contact with the contacting portion 1341 and so as to be relatively displaced with respect to the brake pad 1304, and the actuator 3, which presses the brake pad 1304 against the disk rotor 5. Therefore, since the absorbing member 46 is capable of absorbing the displacement of a plurality of contacting portions 1341 at a plurality of contact sites, the brake device 1301, the friction couple for brake device 1302, and the brake pad 1304 can make the friction performance appropriate by stabilizing an area of a friction place.

Meanwhile, the brake device, the friction couple for brake device, and the brake pad according to the above-described embodiments of the present invention are not limited to the above-described embodiments and can be variously modified without departing from the scope of claims. The brake device, the friction couple for brake device, and the brake pad according to the embodiments of the present invention may be composed by combining a plurality of the above-described embodiments.

Although it is described supposing that the brake pad 4 and the like is the first member and the disk rotor 5 and the like is the second member in the description above, there is no limitation, and it is possible that the disk rotor is the first member and the brake pad is the second member, that is to say, it may be configured such that the rolling element is held in the cage provided on a side of the disk rotor, for example. In this case, the rolling element is rolled by the brake pad in association with the relative displacement between the brake pad and the disk rotor and it becomes possible to apply the braking force to the wheel by the frictional resistance force generated between the cage and the rolling element of the disk rotor.

Industrial Applicability

The brake device, the friction couple for brake device, and the brake pad according to the present invention are preferably applied to a variety of brake devices, friction couples for brake device, and brake pads used in the vehicle as described above.

Reference Signs List

    1, 201, 301, 401, 501, 601, 701, 801, 901, 1001, 1101, 1201, 1301 BRAKE DEVICE
    2, 202, 302, 402, 502, 602, 702, 802, 902, 1002, 1102, 1202, 1302 FRICTION COUPLE FOR BRAKE DEVICE
    3 ACTUATOR (PRESSING MECHANISM)
    4, 204, 304, 404, 504, 604, 704, 804, 904, 1004, 1104, 1304 BRAKE PAD (FIRST MEMBER)
    5, 1205 DISK ROTOR (SECOND MEMBER, BRAKE ROTOR)
    41, 1141, 1341 CONTACTING PORTION
    42 ROLLING ELEMENT
    43 CAGE
    44, 45, 645, 745 SUPPORTING MEMBER (SUPPORTING PORTION)
    44a INSTALLATION HOLE (CONCAVE PORTION ON ACCOMMODATING SIDE)
    45a, 245a ESCAPING PORTION (CONCAVE PORTION ON BENDING SIDE
    46, 846, 946 ABSORBING MEMBER (ABSORBING PORTION) 346a THROUGH-HOLE
    443c, 543c PROJECTION
    646, 746 ABSORBING PORTIONabsorbing portion
    1048 DISLOCATION PREVENTING PORTION
    1141a, 1342a FRICTION SURFACE
    1251 ACCOMMODATING GROOVE
    1342 FRICTION MATERIAL
    1343 PROJECTION

**Claims**

**1.** A brake device, comprising:

        a first member configured to include a plurality of contacting portions and an absorbing portion capable of absorbing displacement of the contacting portions;
a second member provided capable of relatively displacing with respect to the first member by contacting with the plurality of contacting portions; and
a pressing mechanism configured to press the first member against the second member.

2. The brake device according to claim 1, wherein
the contacting portion includes a rolling element contacting with the second member, and a cage rotatably holding the rolling element, and
the second member rotates the rolling element in the cage in association with the relative displacement.

3. A brake device, comprising:

a first member configured to include a contacting portion and an absorbing portion, the contacting portion including a rolling element and a cage contacting with the rolling element and rotatably holding the rolling element, and the absorbing portion being capable of absorbing displacement of the cage;
a second member provided in contact with the rolling element and configured to rotate the rolling element in the cage in association with relative displacement with respect to the first member; and
a pressing mechanism configured to press the first member against the second member.

4. The brake device according to claim 3, wherein
a plurality of rolling elements and cages are provided, and
the absorbing portion is capable of absorbing the displacement of the cages.

5. A brake device, comprising:

a first member configured to include a contacting portion and an absorbing portion capable of absorbing displacement of the contacting portion at a plurality of contact sites;
a second member provided capable of relatively displacing with respect to the first member by contacting with the contacting portion; and
a pressing mechanism configured to press the first member against the second member.

6. The brake device according to any one of claims 1 to 5, wherein
the first member includes a supporting portion configured to support the contacting portion, and
the absorbing portion absorbs the displacement of the contacting portion relative to the supporting portion in a pressing direction by the pressing mechanism.

7. The brake device according to any one of claims 1 to 6, wherein
when the pressing force acts, a bending amount of a central portion of a contact site of the absorbing portion with the contacting portion becomes larger than the bending amount of an edge portion of the contact site of the absorbing portion with the contacting portion.

8. The brake device according to any one of claims 1 to 7, wherein
a through-hole is provided on a central portion of a contact site of the absorbing portion with the contacting portion.

9. The brake device according to any one of claims 1 to 8, wherein
the contacting portion includes a projection provided on a central portion of a contact site with the absorbing portion and configured to project toward the absorbing portion side.

10. The brake device according to any one of claims 1 to 7, wherein
the absorbing portion is provided with a through-hole on a central portion of a contact site with the contacting portion, and
the contacting portion includes a projection provided on a central portion of a contact site with the absorbing portion and configured to fit into the through-hole.

11. The brake device according to any one of claims 1 to 10, wherein
the first member is provided with a concave portion on an accommodating side configured to accommodate the contacting portion, and a concave portion on a bending side having a size equal to or larger than a size of the concave portion on the accommodating side on a side opposite to the concave portion on the accommodating side across the absorbing portion.

12. The brake device according to any one of claims 1 to 11, wherein
in the absorbing portion, a spring constant of a contact site with the contacting portion differs depending on a position of a contact site with the contacting portion.

13. The brake device according to any one of claims 1 to 12, wherein
the absorbing portion is provided with a through-hole on a central portion of a contact site with the contacting portion and a size of the through-hole differs depending on a position of a contact site with the contacting portion.

14. The brake device according to any one of claims 1 to 13, wherein
in the absorbing portion, an elastic modulus of the contact site differs depending on a position of a contact site with the contacting portion.

15. The brake device according to any one of claims 1 to 14, wherein
the first member includes a dislocation preventing portion provided on a side opposite to the contacting portion across the absorbing portion and configured to prevent the contacting portion from dropping.

16. The brake device according to claim 2 or 3, wherein
the cage and the second member are configured such that force to rotate the rolling element by the second member is larger than force to hold the rolling element by the cage.

17. The brake device according to claim 2 or 3, wherein
the second member includes an accommodating groove formed on a contact portion with the rolling element in a direction of the relative displacement and configured to accommodate a part of the rolling element.

18. The brake device according to claim 2 or 3, wherein
the rolling element is formed of a hard material.

19. The brake device according to any one of claims 1 to 18, wherein
the first member is incapable of rotating together with a wheel, and
the second member is capable of rotating together with the wheel.

20. The brake device according to any one of claims 1 to 19, wherein
the first member is a brake pad, and
the second member is a brake rotor.

21. A friction couple for brake device, comprising:

    a first member configured to include a plurality of contacting portions and an absorbing portion capable of absorbing displacement of the contacting portions; and
    a second member provided capable of relatively displacing with respect to the first member by contacting with the plurality of contacting portions.

22. A friction couple for brake device, comprising:

    a first member configured to include a contacting portion and an absorbing portion, the contacting portion including a rolling element and a cage contacting with the rolling element and rotatably holding the rolling element, and the absorbing portion being capable of absorbing displacement of the cage; and
    a second member provided in contact with the rolling element and configured to rotate the rolling element in the cage in association with relative displacement with respect to the first member.

23. A brake pad, comprising:

    a plurality of contacting portions configured to contact with a disk rotor rotating together with a wheel; and
    an absorbing portion capable of absorbing displacement of the plurality of contacting portions.

24. A brake pad, comprising:

a contacting portion configured to include a rolling element contacting with a disk rotor rotating together with a wheel, and a cage contacting with the rolling element and rotatably holding the rolling element; and

an absorbing portion capable of absorbing displacement of the cage.

# FIG.1

# FIG.2

OUTER SIDE
(OUTER PERIPHERAL SIDE)

RADIAL DIRECTION

INNER SIDE
(INNER PERIPHERAL SIDE)

PRESSING DIRECTION

EP 2 578 898 A1

# FIG.3

# FIG.4

26

# FIG.5

# FIG.6

(OUTER PERIPHERAL SIDE)

42 (41)

44

(INNER PERIPHERAL SIDE)

42 (41)

42 (41)

# FIG.7

# FIG.8

# FIG.9

42

43

43a

43b

PRESSING
DIRECTION

# FIG.10

42

43

43a

43b

PRESSING
DIRECTION

# FIG.11

PRESSING DIRECTION

RELATIVE DISPLACEMENT DIRECTION
(ROTOR ROTATIONAL DIRECTION)

# FIG.12

202 (201)

PRESSING DIRECTION

# FIG.13

# FIG.14

402 (401)

# FIG.15

# FIG.16

# FIG.17

# FIG.18

# FIG.19

# FIG.20

1002 (1001)

# FIG.21

1102 (1101)

# FIG.22

1202 (1201)

# FIG.23

PRESSING
DIRECTION

RELATIVE DISPLACEMENT DIRECTION
(ROTATIONAL DIRECTION)

# FIG.24

# FIG.25

<div align="center">

**INTERNATIONAL SEARCH REPORT**

</div>

| | International application No. |
|---|---|
| | PCT/JP2010/059554 |

**A. CLASSIFICATION OF SUBJECT MATTER**
*F16D65/092*(2006.01)i

According to International Patent Classification (IPC) or to both national classification and IPC

**B. FIELDS SEARCHED**

Minimum documentation searched (classification system followed by classification symbols)
F16D65/092

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2236311 A (Carolus L. Eksergian), 25 March 1941 (25.03.1941), page 1, right column, lines 29 to 59; fig. 1 to 5 & GB 527218 A  & FR 852000 A | 1,5-6,8,12, 14-15,19-21, 23 |
| X | JP 2002-524699 A (Knorr-Bremse Systeme fuer Schienenfahrzeuge GmbH), 06 August 2002 (06.08.2002), paragraphs [0041] to [0057]; fig. 1A to 7B & US 6494301 B1  & EP 1108153 A1 & WO 2000/014422 A1  & DE 19840065 A1 | 1,5-7,15, 19-21,23 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 June, 2010 (18.06.10) | 29 June, 2010 (29.06.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/059554

| C (Continuation). DOCUMENTS CONSIDERED TO BE RELEVANT | | |
|---|---|---|
| Category* | Citation of document, with indication, where appropriate, of the relevant passages | Relevant to claim No. |
| X | Microfilm of the specification and drawings annexed to the request of Japanese Utility Model Application No. 1154/1986(Laid-open No. 114226/1987) (Toyota Motor Corp.), 21 July 1987 (21.07.1987), page 9, line 15 to page 10, line 5; fig. 3 (Family: none) | 1,5-6,19-21, 23 |
| X | DE 102006029922 A1 (Hoffmeister Dieter), 03 January 2008 (03.01.2008), fig. 1 to 5 (Family: none) | 1,5,21,23 |
| A | Microfilm of the specification and drawings annexed to the request of Japanese Utility Model Application No. 4844/1983(Laid-open No. 112038/1984) (Toyota Motor Corp.), 28 July 1984 (28.07.1984), page 5, line 1 to page 9, line 18; fig. 1 to 3 (Family: none) | 2-4,16-18, 22,24 |
| A | JP 2003-513203 A (Thomson Industries, Inc.), 08 April 2003 (08.04.2003), paragraphs [0029] to [0042]; fig. 7 to 14 & US 6939044 B1 & EP 1224399 A1 & WO 2001/031212 A1 & AU 1229201 A & CA 2388640 A1 | 2-4,16-18, 22,24 |

Form PCT/ISA/210 (continuation of second sheet) (July 2009)

**EP 2 578 898 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S56113241 B